(19) Europäisches Patentamt
European Patent Office
Office européen des brevets

(11) EP 3 538 679 B1

(12) **FASCICULE DE BREVET EUROPEEN**

(45) Date de publication et mention de la délivrance du brevet:
**28.06.2023 Bulletin 2023/26**

(21) Numéro de dépôt: **17797635.4**

(22) Date de dépôt: **13.11.2017**

(51) Classification Internationale des Brevets (IPC):
***C22B 3/26*** (2006.01) ***B01D 11/04*** (2006.01)
***C22B 3/00*** (2006.01)

(52) Classification Coopérative des Brevets (CPC):
**B01D 11/04; C22B 3/26; C22B 23/0484;**
Y02P 10/20

(86) Numéro de dépôt international:
**PCT/EP2017/079056**

(87) Numéro de publication internationale:
**WO 2018/087364 (17.05.2018 Gazette 2018/20)**

(54) **SYSTÈME BIPHASIQUE AQUEUX LIQUIDE IONIQUE-ACIDE**

WÄSSRIGES ZWEIPHASENSYSTEM AUS IONISCHER FLÜSSIGKEIT UND SÄURE

IONIC LIQUID-ACID AQUEOUS TWO-PHASE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2016 FR 1660999**

(43) Date de publication de la demande:
**18.09.2019 Bulletin 2019/38**

(73) Titulaires:
- **Centre National de la Recherche Scientifique 75016 Paris (FR)**
- **Institut Polytechnique de Grenoble 38000 Grenoble (FR)**
- **Universidade de Aveiro Aveiro 3810-193 (PT)**
- **Université Savoie Mont Blanc 73000 Chambéry (FR)**

(72) Inventeurs:
- **PAPAICONOMOU, Nicolas 06000 Nice (FR)**
- **DA COSTA E ARAUJO PEREIRA COUTINHO, Joao Manuel 3830-008 Ilhavo (PT)**
- **GRAS, Matthieu 38700 Corenc (FR)**
- **BILLARD, Isabelle 38100 Grenoble (FR)**

(74) Mandataire: **Lavoix**
**2, place d’Estienne d’Orves**
**75441 Paris Cedex 09 (FR)**

(56) Documents cités:
**CN-A- 101 457 292 US-A1- 2014 246 370**

- **SIL WELLENS ET AL: "An environmentally friendlier approach to hydrometallurgy: highly selective separation of cobalt from nickel by solvent extraction with undiluted phosphonium ionic liquids", GREEN CHEMISTRY, vol. 14, no. 6, 1 janvier 2012 (2012-01-01), page 1657, XP055225618, GB ISSN: 1463-9262, DOI: 10.1039/c2gc35246j**
- **HOOGERSTRAETE, T.V. ET AL: "Removal of transition metals from rare earths by solvent extraction with an undilute phosphonium ionic liquid: separation relevant to rare-earth magnet recycling", GREEN CHEMISTRY, vol. 15, 2013, pages 919-927, XP002771973,**
- **A. P. DE LOS RÍOS ET AL: "Removal of Metal Ions from Aqueous Solutions by Extraction with Ionic Liquids +", JOURNAL OF CHEMICAL & ENGINEERING DATA, vol. 55, no. 2, 11 février 2010 (2010-02-11), pages 605-608, XP055040367, ISSN: 0021-9568, DOI: 10.1021/je9005008**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente demande concerne une composition comprenant deux phases liquides, l'une enrichie en liquide ionique, l'autre enrichie en solution aqueuse acide, une telle composition correspondant à un système biphasique aqueux liquide ionique-acide, et ses utilisations, notamment pour extraire des ions métalliques.

Les ions métalliques sont généralement solubles dans des solutions aqueuses acides, voire fortement acides, et peu solubles en solution neutre ou basique. Peu de milieux d'extraction sont compatibles avec ces conditions acides.

Il est connu d'utiliser des solvants organiques, tel que du kérosène pour l'extraction d'ions métalliques d'une phase aqueuse acide. Ces solvants organiques sont toutefois toxiques et inflammables.

Les liquides ioniques sont de plus en plus considérés comme des solvants alternatifs aux solvants organiques. Un liquide ionique est un sel possédant une température de fusion inférieure à 100 °C. Les liquides ioniques ne sont pas explosifs et le risque d'explosion ou de pollution par voie atmosphérique est donc évité. Les liquides ioniques ne sont pas volatils et n'ont pas de pression de vapeur. La phase extractante reste donc stable et inerte durant un stockage prolongé.

La littérature rapporte l'utilisation de liquides ioniques hydrophobes et très peu solubles à l'eau pour extraire des ions métalliques de phases aqueuses. Les liquides ioniques hydrophobes ont toutefois l'inconvénient d'être généralement non seulement coûteux, mais aussi visqueux, ce qui rend leur manipulation complexe.

Par ailleurs, des systèmes aqueux biphasiques (« aqueous biphasic system » en anglais (ABS)), composés de deux solutions aqueuses immiscibles, permettent également de réaliser des extractions liquide-liquide sans utiliser de solvant organique ou volatil. La plupart des systèmes aqueux biphasiques sont à base de phases polymère / sel, de phases polymère / polymère ou de phases sel / sel.

Certains systèmes aqueux biphasiques liquide ionique hydrophile / sel inorganique sont connus. L'apparition de deux phases est observée au-delà de certaines concentrations en liquide ionique hydrophile et en sel inorganique, une des phases étant principalement constituée de liquide ionique et d'eau, l'autre de sel inorganique et d'eau. Le principe sous-jacent à la formation de ces systèmes réside dans le fait d'associer deux espèces chargées (liquide ionique et sel inorganique), l'un étant cosmotrope, l'autre chaotrope, ou autrement dit, un sel inorganique contenant des ions à haute enthalpie libre d'hydration, de préférence des ions multivalents, et un liquide ionique ayant une enthalpie libre de solvatation faible, avec des ions volumineux, des chaines alkyles et/ou des anions peu hydrophiles. Ces systèmes ont jusqu'à présent été principalement développés avec une eau à pH neutre à légèrement basique (pH < 10). Ils sont utilisés pour l'extraction de molécules organiques (colorants alimentaires, produits pharmaceutiques, molécules organiques), et plus rarement, pour l'extraction d'ions métalliques : Onghena et al. (Chem. Comm. 2015, 51, 15932-15935) rapporte l'utilisation d'un système aqueux biphasique chlorure de tributyl(tétradécyl)phosphonium ($[P_{44414}][Cl]$) / NaCl pour la séparation d'ion cobalt et d'ion nickel.

Peu de systèmes aqueux biphasiques avec une phase aqueuse acide ont été décrits jusqu'à présent. Or, les ions métalliques sont généralement solubles dans des solutions aqueuses acides et peu solubles en solution aqueuse neutre ou basique. Des systèmes aqueux biphasiques comprenant une phase aqueuse acide sont donc particulièrement recherchés.

Ghosh et al. (J. Radioanal. Nucl. Chem., 2014, 302, 925-930) décrivent l'utilisation d'un système aqueux biphasique chlorure de 1-butyl-3-méthylimidazolium [BMIM][Cl] / $K_2HPO_4$ pour extraire des ions argent. La séparation est effectuée en milieu acide nitrique pour ne pas précipiter les métaux. Dans ce système biphasique aqueux, l'acide nitrique est un sel spectateur qui ne contribue pas à la séparation de phases. Le milieu est assez complexe en ce que de nombreux anions sont en présence ($Cl^-$, $NO_3^-$, $HPO_4^-$) et en ce que le cation $K^+$ est surnuméraire, ce qui génère un risque d'avoir une extraction parasite de cet ion.

De plus, Onghena et al. (Ind. Eng. Chem ; res. 2015, 54, 1887-1898) décrivent l'utilisation d'un système aqueux biphasique bis(trifluorométhylsulfonyl)imide de bétainium $[Hbet][NTf_2]$/NaCl à différents pH. La viscosité importante de $[Hbet][NTf_2]$ est néfaste pour la séparation de phase, qui nécessite une heure. L'utilisation de ce liquide ionique est délicate en ce que son caractère hygroscopique nécessite une présaturation avec de l'eau avant utilisation. Par ailleurs, le système ne permet pas des extractions efficaces à des pH inférieurs à 1,5.

Wellens et al. (Green Chem. 2012, 14, 1657) décrivent un procédé d'extraction à 60°C de cobalt à partir d'un milieu comprenant du cobalt et du nickel, et éventuellement du magnésium et du calcium, et mettant en oeuvre un milieu biphasique comprenant un liquide ionique phosphonium et une solution aqueuse acide HCl 8M. Ce procédé comprend l'agitation vive des deux phases pendant 10 min à 60 °C, suivi de leur centrifugation et de leur analyse.

Hoogerstraete et al. (Green Chem. 2013, 15, 919) décrivent un procédé d'extraction de métaux de transition (Cu, Co, Fe, Mn, Zn) d'aimants permanents mettant en oeuvre un milieu biphasique comprenant un liquide ionique phosphonium et une solution aqueuse acide HCl 8,5M ou 9M. Ce procédé comprend l'agitation vive des deux phases pendant 10 min à 60 °C, suivi de leur centrifugation et de leur analyse.

De los Rios et al. (J. Chem. Eng. Data, 2010, 55, 605) décrivent un procédé d'extraction de $Zn^{2+}$, $Cd^{2+}$ et $Fe^{3+}$ en solution aqueuse mettant en oeuvre un milieu biphasique comprenant un liquide ionique et une solution aqueuse

acide HCl 1M. Ce procédé comprend l'agitation vive des deux phases pendant 5 min suivi de leur centrifugation et de leur analyse.

Des compositions alternatives peu coûteuses comprenant une solution aqueuse acide qui permettent une extraction et/ou une séparation simple et efficace des ions métalliques est donc recherchée.

A cet effet, la présente demande décrit une composition (non revendiquée) comprenant :

- un liquide ionique de formule $C^+,(X^{p-})_{1/p}$, dans laquelle :

  - $C^+$ est un cation onium comprenant au moins un atome choisi parmi N, S, P ou O, ledit cation onium comprenant au moins une chaîne hydrocarbonée $R^1$ comprenant de 6 à 20 atomes de carbone, éventuellement interrompue par un ou plusieurs groupes choisis parmi -S-, -O-, -(C=O)-O-, -O-(C=O)-, $-NR^{10}$-(C=O)-, -(C=O)-$NR^{11}$- ou $-NR^{12}R^{13}$-, et/ou éventuellement substituée par un ou plusieurs groupes choisis parmi un halogène, $-OR^{14}$, $-(C=O)R^{15}$, $-(C=O)NR^{16}R^{17}$-, $-NR^{18}R^{19}R^{20}$, $-S-R^{21}$, $-(C=O)-OR^{22}$, où $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$ et $R^{22}$ représentent indépendamment H ou une chaîne hydrocarbonée linéaire ou ramifiée comprenant de 1 à 6 atomes de carbone,
  - $X^{p-}$ est un anion de charge p,

  ledit liquide ionique ayant une solubilité dans l'eau à 20°C d'au moins 10 g/L,
- un acide, et
- de l'eau.

ladite composition comprenant deux phases liquides :

- une phase enrichie en liquide ionique $\varphi_{IL}$ et
- une phase enrichie en eau $\varphi_W$, dont le pH est inférieur ou égal à 4,7.

L'invention repose sur la découverte qu'un système aqueux biphasique comprenant une phase aqueuse acide peut être obtenu :

- en utilisant des liquides ioniques peu coûteux et hydrophiles (solubilité dans l'eau à 20°C d'au moins 10 g/L) et
- sans qu'il soit nécessaire d'utiliser un mélange complexe d'ions (mélange complexe de sels et/ou d'acides) pour avoir une bonne séparation de phase.

La composition correspondrait à un « système aqueux biphasique liquide ionique hydrophile / sel inorganique » dans lequel le rôle du sel organique est joué par l'acide. La composition est un système aqueux biphasique liquide ionique-acide. Elle comprend nécessairement deux phases liquides $\varphi_{IL}$ et $\varphi_W$.

Le fait qu'une composition comprenant un acide, un liquide ionique et de l'eau comprenne une ou deux phases liquides dépend des natures du liquide ionique et de l'acide, de leurs concentrations, de la concentration en eau et de la température.

A une température donnée, le système biphasique se forme dès que les concentrations en acide et en liquide ionique sont suffisantes.

Une composition comprenant un liquide ionique donné, un acide donné, des proportions spécifiques d'eau, de liquide ionique et d'acide peut être monophasique à certaines températures et biphasique à d'autres températures. Le comportement de la composition peut être de type température critique inférieure de solubilité LCST (« low critical solution température » en anglais - LCST), c'est-à-dire que la composition est biphasique pour des températures supérieures à une certaine température. En alternative, le comportement de la composition peut être de type température critique supérieure de solubilité UCST (« upper critical solution température » en anglais - UCST), c'est-à-dire que la composition est biphasique pour des températures inférieures à une certaine température. Aussi, selon l'alternative, augmenter ou abaisser la température favorise la séparation de phases.

Généralement, la composition comprend deux phases liquides $\varphi_{IL}$ et $\varphi_W$ à au moins une température comprise entre 0 et 100°C. Selon un premier cas, une composition comprenant un liquide ionique donné, un acide donné, des proportions spécifiques d'eau, de liquide ionique et d'acide peut être biphasique à toute température entre 0 et 100°C. Selon un deuxième cas, elle peut être monophasique entre 0°C et une température donnée $T_1$ et biphasique entre la température $T_1$ et 100°C (LCST). Selon une troisième alternative, elle peut être biphasique entre 0°C et une température donnée $T_2$ et monophasique entre la température $T_2$ et 100°C (UCST). Selon un quatrième cas, elle peut être monophasique entre 0°C et une température donnée $T_3$, biphasique entre $T_3$ et une température donnée $T_4$ supérieure à $T_3$ et monophasique entre la température $T_4$ et 100°C. Le cas dans lequel on se trouve dépend des natures du liquide ionique et de l'acide, de leurs concentrations, de la concentration en eau. L'homme du métier sait déterminer sans

difficulté avec un diagramme de phase si une composition est biphasique à au moins une température comprise entre 0 et 100°C, et dans quel cas défini ci-dessus est la composition. Il est donc facile de préparer la composition en mélangeant de l'eau, un acide et un liquide ionique à diverses proportions, de préférence en s'aidant d'un diagramme de phase.

La composition comprend deux phases liquides $\varphi_{IL}$ et $\varphi_W$. Chacune de ces phases comprend de l'eau, de l'acide et du liquide ionique. Toutefois, la phase liquide $\varphi_{IL}$ est enrichie en liquide ionique, alors que la phase liquide $\varphi_W$ est, par comparaison, pauvre en liquide ionique et enrichie en eau. Autrement dit, la proportion molaire en liquide ionique $[C^+,(X^{p-})_{1/p}]\varphi_{IL}$ dans la phase liquide $\varphi_{IL}$ est supérieure à la proportion molaire en liquide ionique $[C^+,(X^{p-})_{1/p}]\varphi_W$ dans la phase liquide $\varphi_W$ et la proportion molaire en eau $[H_2O]\varphi_{IL}$ dans la phase liquide $\varphi_{IL}$ est inférieure à la proportion molaire en eau $[H_2O]\varphi_W$ dans la phase liquide $\varphi_W$.

Les deux phases liquides $\varphi_{IL}$ et $\varphi_W$ sont visibles à l'œil nu. Typiquement, on estime qu'une composition comprend deux phases liquides $\varphi_{IL}$ et $\varphi_W$ lorsque son unité de turbidité néphélométrique (UTN) mesuré par néphélométrie est supérieure à 30, de préférence 50 quand la composition est mise sous agitation, par exemple à 50 tours/minutes.

La composition comprend un liquide ionique de formule $C^+,(X^{p-})_{1/p}$.

$C^+$ est un cation onium comprenant au moins un atome choisi parmi N, S, P ou O, de préférence choisi parmi :

- les cations ammonium, phosphonium, sulfonium et
- les cations d'un hétérocycle saturé, insaturé ou aromatique comprenant de 4 à 9 atomes, dont au moins un hétéroatome choisi parmi N, S ou O,

ledit cation onium comprenant au moins une chaîne hydrocarbonée $R^1$ telle que définie ci-dessus.

Le cation d'un tel hétérocycle est notamment un pyridinium, un pyrrolidinium, un pyrazolium, un imidazolium, un thiazolium ou un ixazolium, de préférence un pyridinium, un imidazolium ou un thiazolium.

Le liquide ionique a notamment l'une des formules suivantes :

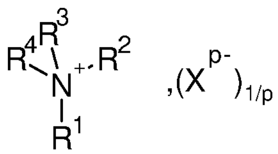
(I),
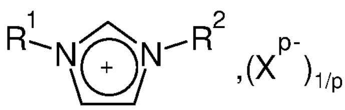
(II),
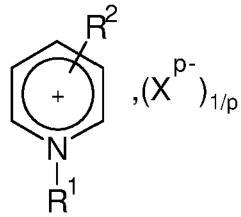
(III),

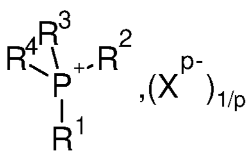
(IV) ou
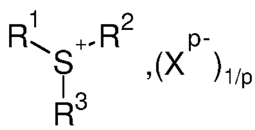
(V),

dans lesquelles :

- $R^1$ est telle que définie ci-dessus,
- $R^2$, $R^3$ et $R^4$ représentent indépendamment une chaîne hydrocarbonée comprenant de 1 à 20 atomes de carbone, éventuellement interrompue par un ou plusieurs groupes choisis parmi -S-, -O-, -(C=O)-O-, -O-(C=O)-, $-NR^{110}$-(C=O)-, -(C=O)-$NR^{111}$- ou -$NR^{112}R^{113}$-, et/ou éventuellement substituée par un ou plusieurs groupes choisis parmi un halogène, -$OR^{114}$, -(C=O)$R^{115}$, -(C=O)$NR^{116}R^{117}$-, -$NR^{118}R^{119}R^{120}$, -S-$R^{121}$, -(C=O)-$OR^{122}$, où $R^{110}$ $R^{111}$, $R^{112}$, $R^{113}$, $R^{114}$, $R^{115}$, $R^{116}$, $R^{117}$, $R^{118}$, $R^{119}$, $R^{120}$, $R^{121}$ et $R^{122}$ représentent indépendamment H ou une chaîne hydrocarbonée linéaire ou ramifiée comprenant de 1 à 6 atomes de carbone,
  étant entendu que deux groupes choisis parmi $R^1$, $R^2$, $R^3$ et $R^4$ peuvent être reliés pour former un cycle,
- $X^{p-}$ est un anion de charge p.

Généralement, la chaine $R^1$ du cation onium, notamment du cation onium des formules (I) à (V) ci-dessus, représente :

- un alkyle, un alcényle, un alcynyle, lesdits alkyle, alcényle et alcynyle comprenant de 6 à 20 atomes de carbone et étant linéaires, ramifiés ou cycliques, étant éventuellement interrompus par un ou plusieurs groupes choisis parmi -S-, -O-, -(C=O)-O-, -O-(C=O)-, $-NR^{10}$-(C=O)-, -(C=O)-$NR^{11}$- ou -$NR^{12}R^{13}$-, et/ou éventuellement substitués par un

ou plusieurs groupes choisis parmi un halogène, $-OR^{14}$, $-(C=O)R^{15}$, $-(C=O)NR^{16}R^{17}-$, $-NR^{18}R^{19}R^{20}$, $-S-R^{21}$, $-(C=O)-OR^{22}$, où $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{21}$ et $R^{22}$ sont tels que définis ci-dessus, ou

- un aryle comprenant de 6 à 20 atomes de carbone, ledit aryle comprenant éventuellement un ou plusieurs atomes choisis parmi -S-, -O-, et $-NR^{12}R^{13}-$, et/ou ledit aryle étant éventuellement substitué par un ou plusieurs groupes choisis parmi un halogène, $-OR^{14}$, $-(C=O)R^{15}$, $-(C=O)NR^{16}R^{17}-$, $-NR^{18}R^{19}R^{20}$ , $-S-R^{21}$ , $-(C=O)-OR^{22}$, où $R^{12}$, $R^{13}$, $R^{14}$, $R^{15}$, $R^{16}$, $R^{17}$, $R^{18}$, $R^{19}$, $R^{20}$, $R^{21}$ et $R^{22}$ sont tels que définis ci-dessus.

De préférence, la chaine $R^1$ du cation onium, notamment du cation onium des formules (I) à (V) ci-dessus, représente :

- un alkyle linéaire, ramifié ou cyclique comprenant de 6 à 20 atomes de carbone,
- un alcoxyle linéaire, ramifié ou cyclique comprenant de 6 à 20 atomes de carbone, ou
- un groupe de formule $-[(CH_2)_2-O]_x-R^{150}$, où x représente un nombre entier de 3 à 10 et $R^{150}$ représentent H ou une chaîne hydrocarbonée linéaire ou ramifiée comprenant de 1 à 6 atomes de carbone, de préférence un méthyle,
- un groupe de formule $-[(CH_2)_3-O]_y-R^{151}$,où y représente un nombre entier de 2 à 6 et $R^{151}$ représentent H ou une chaîne hydrocarbonée linéaire ou ramifiée comprenant de 1 à 6 atomes de carbone, de préférence un méthyle.

De préférence, la chaine $R^1$ comprend au moins 8, notamment au moins 10, typiquement au moins 12, par exemple au moins 14 atomes de carbone.

$R^{22}$ représente généralement une chaîne hydrocarbonée linéaire ou ramifiée comprenant de 1 à 6 atomes de carbone.

De préférence, le cation $C^+$ comprend, en plus de la chaîne hydrocarbonée $R^1$ définie ci-dessus, une chaîne hydrocarbonée $R^2$ comprenant de 2 à 20 atomes de carbone, notamment de 4 à 20 atomes de carbone éventuellement interrompue par un ou plusieurs groupes choisis parmi -S-, -O-, -(C=O)-O-, -O-(C=O)-, $-NR^{210}-(C=O)-$, $-(C=O)-NR^{211}-$ ou $-NR^{212}R^{213}-$, et/ou éventuellement substituée par un ou plusieurs groupes choisis parmi un halogène, $-OR^{214}$, $-(C=O)R^{215}$, $-(C=O)NR^{216}R^{217}-$, $-NR^{218}R^{219}R^{220}$, $-S-R^{221}$ , $-(C=O)-OR^{222}$, où $R^{210}$, $R^{211}$ , $R^{212}$, $R^{213}$, $R^{214}$, $R^{215}$ $R^{216}$, $R^{217}$, $R^{218}$, $R^{219}$, $R^{220}$, $R^{221}$ et $R^{222}$ représentent indépendamment H ou une chaîne hydrocarbonée linéaire ou ramifiée comprenant de 1 à 6 atomes de carbone, les groupes $R^1$ et $R^2$ pouvant être reliés pour former un cycle. Ce cation a typiquement une des formules (I), (II), (III), (IV) ou (V) telles que définies ci-dessus.

Le cation $C^+$ peut comprendre, en plus de la chaîne hydrocarbonée $R^1$ et de la chaîne hydrocarbonée $R^2$ définies ci-dessus, une chaîne hydrocarbonée $R^3$ comprenant de 2 à 20 atomes de carbone notamment de 4 à 20 atomes de carbone éventuellement interrompue par un ou plusieurs groupes choisis parmi -S-, -O-, -(C=O)-O-, -O-(C=O)-, $-NR^{310}-(C=O)-$, $-(C=O)-NR^{311}-$ ou $-NR^{312}R^{313}-$, et/ou éventuellement substituée par un ou plusieurs groupes choisis parmi un halogène, $-OR^{314}$, $-(C=O)R^{315}$, $-(C=O)NR^{316}R^{317}-$, $-NR^{318}R^{319}R^{320}$, $-S-R^{321}$ , $-(C=O)-OR^{322}$, où $R^{310}$, $R^{311}$ , $R^{312}$, $R^{313}$, $R^{314}$, $R^{315}$, $R^{316}$, $R^{317}$, $R^{318}$, $R^{319}$, $R^{320}$, $R^{321}$ et $R^{322}$ représentent indépendamment H ou une chaîne hydrocarbonée linéaire ou ramifiée comprenant de 1 à 6 atomes de carbone, étant entendu que deux groupes choisis parmi $R^1$, $R^2$ et $R^3$ peuvent être reliés pour former un cycle. Ce cation a typiquement une des formules (I), (IV) ou (V) telles que définies ci-dessus.

De préférence, $R^2$, $R^3$ et $R^4$ représentent indépendamment :

- un alkyle linéaire, ramifié ou cyclique comprenant de 2 à 20 atomes de carbone,
- un alcoxyle linéaire, ramifié ou cyclique comprenant de 2 à 20 atomes de carbone, ou
- un groupe de formule $-[(CH_2)_2-O]_{x'}-R^{150}$, où x' représente un nombre entier de 1 à 10 et $R^{150}$ représentent H ou une chaîne hydrocarbonée linéaire ou ramifiée comprenant de 1 à 6 atomes de carbone, de préférence un méthyle,
- un groupe de formule $-[(CH_2)_3-O]_{y'}-R^{151}$, où y' représente un nombre entier de 1 à 6 et $R^{151}$ représentent H ou une chaîne hydrocarbonée linéaire ou ramifiée comprenant de 1 à 6 atomes de carbone, de préférence un méthyle.

Parmi les liquides ioniques préférés, on peut citer ceux de formules (X), (XI), (XII), (XIII) ou (XIV) suivantes :

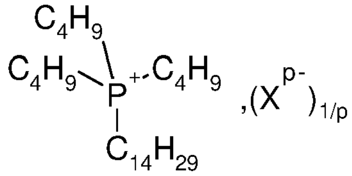
(X),

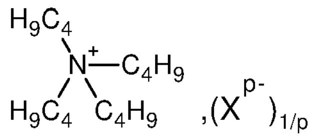
(XI),

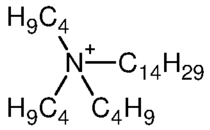 $,(X^{p-})_{1/p}$ (XII), 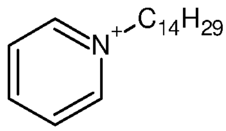 $,(X^{p-})_{1/p}$ (XIII),

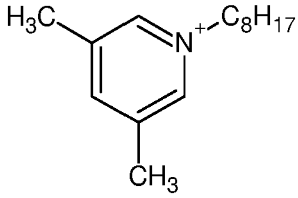 $,(X^{p-})_{1/p}$ (XIV)

dans lesquelles $X^{p-}$ est un anion de charge p.

De préférence, dans la composition, le cation $C^+$ ne comprend pas de charge négative. Il ne s'agit pas d'un zwiterrion.

L'anion $X^{p-}$ est choisi notamment parmi les anions $BF_4^-$, $PF_6^-$, $CF_3SO_3^-$, $HSO_4^-$, $SO_4^{2-}$, $NO_3^-$, $CH_3COO^-$, $CF_3CO_2^-$, $ClO_4^-$, $HPO_4^{2-}$, $H_2PO_4^-$, les halogénures (tels que $Cl^-$, Br, $I^-$ ou F), les anions $BR^5{}_4^-$, $RCO_2^-$ ou $R^5SO_3^-$, $R^5$ étant un groupe alkyle linéaire ou ramifié comprenant de 1 à 4 atomes de carbone, de préférence un méthyle. De préférence, $X^{p-}$est choisi parmi les anions halogénures, $HSO_4^-$, $SO_4^{2-}$, $NO_3^-$, $MeSO_3^-$. Ces anions sont donc « simples », peu coûteux, et peu toxiques, contrairement aux anions hydrophobes perfluorés utilisés habituellement pour préparer des liquides ioniques immiscibles dans l'eau. De plus, les liquides ioniques comprenant ces anions « simples » sont généralement beaucoup moins visqueux que ceux préparés à partir d'anion hydrophobe perfluoré. Ils sont donc plus faciles à manipuler.

De préférence, dans la composition, l'anion $X^{p-}$ ne comprend pas de charge positive. Il ne s'agit pas d'un zwiterrion.

Le liquide ionique a une solubilité dans l'eau à 20°C d'au moins 10 g/L, de préférence d'au moins 20 g/L. L'eau utilisée pour mesurer cette solubilité est typiquement de l'eau distillée, par exemple de l'eau milli-Q ™. Par exemple, le liquide ionique de formule (XI) ci-dessus est soluble à 20°C en toute proportion. L'homme du métier peut très facilement sélectionner les liquides ioniques ayant de telles solubilités dans l'eau.

Généralement, la proportion de liquide ionique est de 10 à 90 % en poids dans la composition.

La composition comprend un acide. Cet acide permet que la phase enrichie en eau $\varphi_W$ ait un pH inférieur ou égal à 4,7. Le pH de la phase enrichie en eau $\varphi_W$ est notamment inférieur à 4,0, typiquement inférieur à 3,0, voire inférieur à 2,0, de préférence inférieur à 1,5, de manière particulièrement préférée inférieur à 1,0, par exemple inférieur à 0,5, notamment inférieur à 0,2.

Généralement, l'acide est un acide dont au moins l'un des pKa est inférieur ou égal à 4,7. Lorsqu'un acide a un seul pKa, celui-ci est inférieur ou égal à 4,7. Lorsqu'un acide a plusieurs pKa, il suffit que l'un d'entre eux soit inférieur ou égal à 4,7. Le pKa est celui mesuré dans l'eau à 25°C.

L'acide peut être organique, inorganique ou un mélange de ceux-ci.

Parmi les acides organiques, on peut citer l'acide formique (pKa = 3,8), l'acide acétique (pKa =4,7 ), l'acide oxalique (pKa = 1,2), l'acide lactique (pKa =3,9 ), l'acide urique (pKa - -1,1), l'acide p-toluenesulfonique (pKa - -2,8), l'acide trifluorométhanesulfonique (pKa = -12).

Parmi les acides inorganiques, on peut citer l'acide chlorhydrique, l'acide sulfurique, l'acide nitrique, l'acide phosphorique ou l'acide perchlorique.

De préférence, l'acide a la formule $H_p(X^{p-})$, où $X^{p-}$ est l'anion du liquide ionique de la composition. La séparation des phases $\varphi_{IL}$ et $\varphi_W$ est alors généralement facilitée. Par exemple :

- l'acide est l'acide chlorhydrique et $X^{p-}$ représente $Cl^-$,
- l'acide est l'acide sulfurique et $X^{p-}$ représente $HSO_4^-$ et/ou $SO_4^{2-}$,
- l'acide est l'acide nitrique et $X^{p-}$ représente $NO_3^-$,
- l'acide est l'acide phosphorique et $X^{p-}$ représente $H_2PO_4^-$, $HPO_4^{2-}$ ou $PO_4^{3-}$, ou
- l'acide est l'acide trifluorométhanesulfonique, et $X^{p-}$ représente $CF_3SO_3^-$.

De préférence, la composition ne comprend qu'un seul acide. En effet, il n'est pas nécessaire d'ajouter un second acide pour que les phases $\varphi_{IL}$ et $\varphi_W$ se séparent.

Généralement, la concentration en acide dans la composition est supérieure ou égale à 0,1 mol/L, notamment supérieure ou égale à 1,5 mol/L, de préférence supérieure ou égale à 1,0 mol/L.

La composition ne comprend généralement pas de composés ioniques supplémentaires au liquide ionique, à l'acide et aux sels d'ions métalliques (éventuellement sous forme de complexes). En particulier, l'ajout de composés ioniques supplémentaires n'est pas nécessaire pour que les phases $\varphi_{IL}$ et $\varphi_W$ se séparent. La composition est donc simple et peu coûteuse.

La composition comprend de l'eau.

La composition comprend généralement moins de 5% en poids de solvant organique. Elle en est de préférence exempte.

La composition comprend généralement moins de 5% en poids d'agent extractant (sel de cyanure, ammonium, cyanex, ether couronnes, tributylphosphate par exemple). Elle en est de préférence exempte.

Généralement, les proportions cumulées du liquide ionique, de l'eau et de l'acide sont supérieure à 70% en poids, notamment supérieures à 80% en poids, typiquement supérieures à 90% en poids, voire supérieures à 95% en poids, parfois même supérieures à 99% en poids par rapport au poids total de la composition.

La composition est particulièrement utile pour extraire un ion métallique d'un milieu aqueux acide comprenant un ion métallique, pour séparer des ions métalliques d'un milieu aqueux comprenant au moins deux ions métalliques ou pour purifier une solution aqueuse acide comprenant un ion métallique.

Au sens de la demande, par « ion métallique », on entend aussi bien l'ion métallique sous forme libre (par exemple $Co^{2+}$), l'ion métallique sous forme de complexe avec d'autres ions (par exemple $[Co(II)Cl_4]^{2-}$), l'ion métallique sous forme hydratée ou non (par exemple $[Co(H_2O)_5]^{2+}$), ou sous forme complexée et hydratée. Dans les procédés décrits ci-dessous, l'ion métallique peut être sous une forme lors d'une certaine étape et sous une autre forme lors d'une autre étape.

Les ions métalliques sont généralement solubles dans des solutions aqueuses acides. Avantageusement, la composition permet d'extraire un ou certains ions métalliques dans la phase liquide enrichie en liquide ionique $\varphi_{IL}$.

L'utilisation de la composition permet avantageusement d'éviter l'utilisation de solvants organiques tels que le kérosène.

L'ion métallique (M, $M_1$ ou $M_2$ ci-dessous) est de préférence un ion métallique susceptible de former un complexe chargé négativement dans la phase aqueuse acide $\varphi_W$. Il est généralement choisi parmi les ions des métaux précieux (l'or, l'argent, le platine, le rhodium et le palladium), des platinoïdes, des métaux réfractaires et des terres rares.

Aussi, l'invention concerne un procédé d'extraction d'un ion métallique M d'un milieu, comprenant les étapes de :

a) mettre en contact un liquide ionique tel que défini ci-dessus avec un milieu aqueux comprenant un ion métallique M et un acide tel que défini ci-dessus, ce par quoi on obtient une composition à une température $T_i$, ladite composition comprenant une seule phase liquide,

b) faire varier la température pour obtenir une composition à une température $T_f$ différente de $T_i$ comprenant deux phases liquides $\varphi_{IL}$ et $\varphi_W$, sous réserve que, à la température $T_f$, le coefficient de partage de l'ion métallique entre les deux phases $\varphi_{IL}$ et $\varphi_W$ :

$$K(M)_{Tf} = [M]\varphi_{IL}/[M]\varphi_W$$

dans laquelle $[M]\varphi_{IL}$ est la concentration en M dans la phase $\varphi_{IL}$ à la température $T_f$ et $[M]\varphi_W$ est la concentration en M dans la phase $\varphi_W$ à la température $T_f$,

soit supérieur à 1, de préférence supérieur à 1,1, notamment supérieur à 2, voire supérieur à 5, notamment supérieur à 10, typiquement supérieur à 100,

c) séparer les phases $\varphi_{IL}$ et $\varphi_W$ de la composition obtenue à l'étape b), puis

d) éventuellement extraire l'ion métallique M de la phase $\varphi_{IL}$.

Le procédé est exempt d'étape b) lorsqu'une composition comprenant deux phases liquides $\varphi_{IL}$ et $\varphi_W$ est obtenue à la fin de l'étape a).

Lors de l'étape a) ou b), l'ion métallique M est extrait dans la phase $\varphi_{IL}$.

Le milieu aqueux de l'étape a) est généralement une solution aqueuse.

Il est avantageux que l'étape a) conduise à une composition ne comprenant qu'une seule phase liquide (composition monophasique), en particulier en choisissant la température $T_i$ en ce sens. En effet, le comportement thermotrope de la composition (variation de la formation de deux phases en fonction de la température) permet une formation rapide des deux phases lors de l'étape b) et une extraction immédiate de l'ion métallique lors de l'étape b). Lorsque la composition est de type LCST, il faut augmenter la température pour induire la séparation de phase et $T_f$ est supérieure à $T_i$. Lorsque la composition est de type UCST, il faut diminuer la température pour induire la séparation de phase et $T_f$ est inférieure à $T_i$.

Lorsque l'étape a) conduit à une composition comprenant deux phases liquides $\varphi_{IL}$ et $\varphi_W$, il peut être nécessaire,

afin d'obtenir une bonne extraction de l'ion métallique M, d'agiter les deux phases.

Bien entendu, les étapes a), b) et c) peuvent être répétées une ou plusieurs fois, ce qui permet de réaliser plusieurs cycles de séparation. Dans ce cas, la phase $\varphi_W$ obtenue à la fin de l'étape c) sert de milieu aqueux dans l'étape a) qui est répétée.

Le procédé d'extraction selon l'invention peut permettre de recycler l'ion métallique.

Le procédé peut comprendre, avant l'étape a), une étape $a_0$) de préparation du milieu aqueux comprenant un ion métallique M et un acide, typiquement par mise en contact d'une solution aqueuse acide avec un milieu comprenant un ion métallique M. Ce milieu comprenant un ion métallique M peut être un minerai, un résidu obtenu après une réaction chimique ou un électrolyte... L'étape $a_0$) peut par exemple être une lixiviation. Le milieu aqueux mis en oeuvre à l'étape a) est typiquement une solution lixiviante acide, telles qu'utilisées dans les procédés hydrométallurgiques classiques. Le procédé d'extraction selon l'invention peut être mis en oeuvre dans le cadre d'un procédé hydrométallurgique.

A titre d'exemple, dans le procédé d'extraction défini ci-dessus, le liquide ionique a la formule (IV), de préférence la formule (XI), l'acide est HCl et l'ion métallique M est du Fe(III), du Co(II) ou du Pt(IV).

Le rendement d'extraction du procédé d'extraction selon l'invention est avantageusement extrêmement élevé, et généralement plus élevé que les rendements usuels obtenus en réalisant des extractions avec des solvants organiques et des agents extractants.

Selon un mode de réalisation, le milieu aqueux comprenant un ion métallique M et un acide mis en oeuvre à l'étape a) comprend au moins deux ions métalliques $M_1$ et $M_2$ différents. Le procédé peut alors être un procédé de séparation d'ions métalliques $M_1$ et $M_2$. Selon une première alternative, le procédé est un procédé de séparation d'ions métalliques $M_1$ et $M_2$ comprenant les étapes de :

a') mettre en contact un liquide ionique tel que défini ci-dessus avec un milieu aqueux comprenant deux ions métalliques $M_1$ et $M_2$ (de natures différentes) et un acide tel que défini ci-dessus, ce par quoi on obtient une composition à une température $T_i$, ladite composition comprenant une seule phase liquide,

b') faire varier la température pour obtenir une composition à une température $T_f$ différente de $T_i$ comprenant deux phases liquides $\varphi_{IL}$ et $\varphi_W$, sous réserve que, à la température $T_f$, le facteur de séparation $\beta(M_1/M_2)_{Tf}$ correspondant au rapport entre les coefficients de partage de $M_1$ et $M_2$

$$\beta(M_1/M_2)_{Tf} = K(M_1)_{Ti} / K(M_2)_{Tf} = ([M_1]\varphi_{IL}/[M_1]\varphi_W) / ([M_1]\varphi_{IL}/[M_1]\varphi_W)$$

dans laquelle :

- $K(M_1)_{Ti}$ est le coefficient de partage à la température $T_f$ de l'ion métallique $M_1$ entre les deux phases $\varphi_{IL}$ et $\varphi_W$, avec $K(M_1)_{Tf} = [M_1]\varphi_{IL}/[M_1]\varphi_W$,
- $K(M_2)_{Tf}$ est le coefficient de partage à la température $T_f$ de l'ion métallique $M_2$ entre les deux phases $\varphi_{IL}$ et $\varphi_W$, avec $K(M_2)_{Tf} = [M_2]\varphi_{IL}/[M_2]\varphi_W$
- $[M_1]\varphi_{IL}$ est la concentration en $M_1$ dans la phase $\varphi_{IL}$ à la température $T_f$ et $[M_1]\varphi_W$ est la concentration en $M_1$ dans la phase $\varphi_W$ à la température $T_f$,
- $[M_2]_{\varphi IL}$ est la concentration en $M_2$ dans la phase $\varphi_{IL}$ à la température $T_f$ et $[M_2]\varphi_W$ est la concentration en $M_2$ dans la phase $\varphi_W$ à la température $T_f$,

  soit supérieur à 1, de préférence supérieur à 1,1, notamment supérieur à 2, voire supérieur à 5, notamment supérieur à 10, typiquement supérieur à 100,

c') séparer les phases $\varphi_{IL}$ et $\varphi_W$ de la composition obtenue à l'étape b'), puis

d') éventuellement extraire l'ion métallique $M_1$ de la phase $\varphi_{IL}$,

e') éventuellement extraire l'ion métallique $M_2$ de la phase $\varphi_W$.

Ce mode de réalisation permet avantageusement de séparer au moins deux ions métalliques $M_1$ et $M_2$. Lors de l'étape a') ou b'), l'ion métallique $M_1$ est extrait dans la phase $\varphi_{IL}$ alors que l'ion métallique $M_2$.reste dans la phase $\varphi_W$.

A titre d'exemple, dans le procédé d'extraction selon la première alternative définie ci-dessus, le liquide ionique a la formule (IV), de préférence la formule (XI), l'acide est HCl, et l'ion métallique $M_1$ est du Co(II) et l'ion métallique $M_2$ est du Ni(II). Le cobalt et le nickel sont deux métaux voisins dans le tableau périodique. En outre, ils sont souvent associés aussi bien dans les minerais qui permettent de produire ces métaux que dans les appareils à recycler. Des méthodes pour pouvoir les séparer facilement sont donc recherchées.

Bien entendu, les étapes a'), b') et c') peuvent être répétées une ou plusieurs fois, ce qui permet de réaliser plusieurs cycles de séparation. Dans ce cas, la phase $\varphi_W$ obtenue à la fin de l'étape c') sert de milieu aqueux dans l'étape a') qui est répétée.

Selon une seconde alternative, le procédé est un procédé de séparation d'ions métalliques $M_1$ et $M_2$ comprenant les étapes de :

a") mettre en contact un liquide ionique tel que défini ci-dessus avec un milieu aqueux comprenant un acide tel que défini ci-dessus et deux ions métalliques $M_1$ et $M_2$ (de natures différentes), ce par quoi on obtient une composition à une température $T_i$, ladite composition comprenant :

- soit une seule phase liquide,
- soit deux phases liquides $\varphi_{IL}$ et $\varphi_W$, sous réserve que, à la température $T_i$ :
  - le coefficient de partage de l'ion métallique $M_1$ entre les deux phases $\varphi_{IL}$ et $\varphi_W$ :

$$K(M_1)_{Ti} = [M_1]\varphi_{IL}/[M_1]\varphi_W$$

    soit supérieur à 1, de préférence supérieur à 1,1, notamment supérieur à 2, voire supérieur à 5, notamment supérieur à 10, typiquement supérieur à 100,
  - le coefficient de partage de l'ion métallique $M_2$ entre les deux phases $\varphi_{IL}$ et $\varphi_W$ :

$$K(M_2)_{Ti} = [M_2]\varphi_{IL}/[M_2]\varphi_W$$

    soit supérieur à 1, de préférence supérieur à 1,1, notamment supérieur à 2, voire supérieur à 5, notamment supérieur à 10, typiquement supérieur à 100,

b") lorsqu'une composition comprenant une seule phase liquide est obtenue à l'étape a"), faire varier la température pour obtenir une composition à une température $T_f$ différente de $T_i$ comprenant deux phases liquides $\varphi_{IL}$ et $\varphi_W$, sous réserve que, à la température $T_f$ :

- le coefficient de partage de l'ion métallique $M_1$ entre les deux phases $\varphi_{IL}$ et $\varphi_W$ :

$$K(M_1)_{Tf} = [M_1]\varphi_{IL}/[M_1]\varphi_W$$

  soit supérieur à 1, de préférence supérieur à 1,1, notamment supérieur à 2, voire supérieur à 5, notamment supérieur à 10, typiquement supérieur à 100,
- le coefficient de partage de l'ion métallique $M_2$ entre les deux phases $\varphi_{IL}$ et $\varphi_W$ :

$$K(M_2)_{Tf} = [M_2]\varphi_{IL}/[M_2]\varphi_W$$

  soit supérieur à 1, de préférence supérieur à 1,1, notamment supérieur à 2, voire supérieur à 5, notamment supérieur à 10, typiquement supérieur à 100,

c") séparer les phases $\varphi_{IL}$ et $\varphi_W$ de la composition obtenue à l'étape a") ou b"), puis
d") mettre en contact, à une température $T_\Omega$, la phase $\varphi_{IL}$ avec une solution aqueuse telle que :

- la solubilité dans ladite solution aqueuse à la température $T_\Omega$ de $M_1$ est supérieure ou égale 0,01 mol/L,
- la solubilité dans ladite solution aqueuse à la température $T_\Omega$ de $M_2$ est inférieure ou égale à 0,001 mol/L,

ce par quoi $M_2$ précipite et on obtient un milieu $\Omega$ comprenant un solide comprenant $M_2$ et au moins une phase liquide comprenant $M_1$,
e") éventuellement filtrer le milieu $\Omega$ pour récupérer le solide comprenant $M_2$,
f") éventuellement extraire l'ion métallique $M_1$ de la phase liquide.

Le milieu $\Omega$ peut comprendre une ou deux phases liquides.
Lors de l'étape a") ou b"), les ions métallique $M_1$ et $M_2$.sont extraits dans la phase $\varphi_{IL.}$ C'est l'ajout de la phase aqueuse lors de l'étape d") qui permet de séparer les deux ions métalliques, puisque l'ion métallique $M_1$ reste dans la

phase liquide (mélange de liquide ionique, de phase aqueuse et d'ion métallique $M_1$) alors que l'ion métallique $M_2$ précipite. La séparation est donc induite en tenant compte de différences de solubilités de $M_1$ et $M_2$ dans la solution aqueuse introduite à l'étape d").

Bien entendu, les étapes a"), b") et c") peuvent être répétées une ou plusieurs fois, ce qui permet de réaliser plusieurs cycles de séparation. Dans ce cas, la phase $\varphi_W$ obtenue à la fin de l'étape c") sert de milieu aqueux dans l'étape a") qui est répétée.

A titre d'exemple, dans le procédé d'extraction selon la seconde alternative définie ci-dessus, le liquide ionique a la formule (IV), de préférence la formule (XI), l'acide est HCl, et l'ion métallique $M_1$ est du Co(II) et l'ion métallique $M_2$ est du Pt(IV). Typiquement, le milieu aqueux comprenant un acide mis en oeuvre à l'étape a") est une solution aqueuse de pH inférieur à -0,5 par exemple une solution aqueuse d'HCl 10M (dans laquelle les ions Pt(IV) sont solubles) et la solution aqueuse mise en oeuvre à l'étape d') est une solution aqueuse de pH supérieur à 0,5, par exemple une solution aqueuse d'HCl 1M (dans laquelle les ions Pt(IV) ne sont pas solubles).

Selon un autre objet, l'invention concerne un procédé de purification d'une solution aqueuse acide comprenant un ion métallique M comprenant les étapes de :

i) mettre en contact un liquide ionique tel que défini ci-dessus avec une solution aqueuse S comprenant un ion métallique M à une concentration $[M]_S$ et un acide tel que défini ci-dessus, ce par quoi on obtient une composition à une température $T_i$, ladite composition comprenant une seule phase liquide,

ii) faire varier la température pour obtenir une composition à une température $T_f$ différente de $T_i$ comprenant deux phases liquides $\varphi_{IL}$ et $\varphi_W$, sous réserve que, à la température $T_f$, le coefficient de partage de l'ion métallique entre les deux phases $\varphi_{IL}$ et $\varphi_W$ :

$$K(M)_{Tf} = [M]\varphi_{IL}/[M]\varphi_W$$

soit supérieur à 1, de préférence supérieur à 1,1, notamment supérieur à 2, voire supérieur à 5, notamment supérieur à 10, typiquement supérieur à 100,

iii) séparer les phases $\varphi_{IL}$ et $\varphi_W$ de la composition obtenue à l'étape ii), ce par quoi on obtient une phase $\varphi_W$ qui est une solution aqueuse acide dont la concentration en ion métallique M $[M]\varphi_W$ est inférieure à la concentration $[M]_S$

Bien entendu, les étapes i), ii) et iii) peuvent être répétées une ou plusieurs fois, ce qui permet de réaliser plusieurs cycles de séparation. Dans ce cas, la phase $\varphi_W$ obtenue à la fin de l'étape iii) sert de solution aqueuse S dans l'étape i) qui est répétée.

Ce procédé peut permettre de recycler la solution aqueuse acide.

Le procédé peut comprendre, après l'étape iii), une étape iv) d'extraction de l'ion métallique M de la phase $\varphi_{IL}$.

Les étapes d'extraction de l'ion métallique d), d'), e'), f") et iv) définies ci-dessus peuvent par exemple être mises en oeuvre par :

- relargage de l'ion métallique dans une autre phase,
- par précipitation de l'ion métallique, cette précipitation pouvant être induite par un agent complexant l'ion métallique à extraire, par exemple l'acide oxalique, ou
- par électrochimie.

L'invention est illustrée au vu des figures et exemples qui suivent, donnés à titre illustratif.

Figures :

La figure 1 est un diagramme de phase formé par un liquide ionique $[P_{44414}][Cl]$ et HCl à quatre températures différentes, à savoir 24°C, 36°C, 45°C et 56°C. Pour chaque température sont représentés la transition système biphasique/système monophasique en fonction de la concentration massique en $[P_{44414}][Cl]$ (ordonnées) et de la concentration massique en HCl (abscisses).

La figure 2 est un schéma du protocole suivi à l'exemple 3.

La figure 3 est un schéma du protocole suivi à l'exemple 4.

Exemple 1 : Système biphasique $[P_{44414}][Cl]-HCl-H_2O$

Des compositions comprenant de l'eau, HCl et du chlorure de tributyltétradécylphosphonium $[P_{44414}][Cl]$ (Cytec Industries) ont été préparées en faisant varier les concentrations massiques en liquide ionique $[P_{44414}][Cl]$ et en HCl, et ce à quatre températures (24°C, 36°C, 45°C et 56°C). Selon les proportions et les températures, un milieu monophasique ou biphasique a été obtenu.

La figure 1 est un diagramme de phase pour chacune des températures testées.

Le système est biphasique dès lors que le mélange préparé correspond à un point situé dans la zone à droite de la courbe présenté sur la figure 1. Le système correspond alors à une composition telle que décrite dans la présente demande (non revendiquée).

Par contre, dès lors que le mélange préparé correspond à un point situé dans la zone à gauche de la courbe présenté sur la figure 1, le système est monophasique (une phase homogène) et ces systèmes ne sont donc pas des compositions telles que décrites dans la présente demande.

A 45 °C, le système biphasique se forme pour des concentrations en HCl moins importantes que celles nécessaires à 25 °C. Ceci est caractéristique d'un comportement de type LCST.

Exemple 2 : Utilisation d'un système biphasique $[P_{44414}][Cl]-HCl-H_2O$ pour extraire des ions Fe(III)

Le fer a été utilisé comme exemple de métal dont la présence en solution aqueuse nécessite l'utilisation d'acide, pour éviter la formation d'hydroxyde de fer et la précipitation de l'ion métallique.

0,015 g de $FeCl_3$.6H2O (fourni par Alfa Aesar) ont été dissous dans 50 mL à 10 M HCl (fourni par Roth). La solution était jaune. 1mL de cette solution a été mélangé avec 0,25 g de $[P_{44414}][Cl]$ (fourni par Cytec) à 25 °C. Une composition biphasique a été obtenue, comprenant :

- une phase supérieure jaune : la phase enrichie en liquide ionique $\varphi_{IL}$ comprenant le Fe(III), et
- une phase inférieure presque incolore: la phase enrichie en eau $\varphi_W$.

Le coefficient de partage de l'ion métallique Fe (III) entre les deux phases $\varphi_{IL}$ et $\varphi_W$ était

$$K(Fe(III))_{Ti} = [Fe(III)]\varphi_{IL}/[Fe(III)]\varphi_W > 750$$

Fe(III) a été extrait quantitativement avec l'ABS acide $[P_{44414}][Cl]-HCl-H_2O$. Plus de 99,7 % du Fe(III) est extrait de la phase aqueuse acide, tel que mesuré par spectroscopie d'absorption de flamme.

Exemple 3 : Utilisation d'un système biphasique $[P_{44414}][Cl]-HCl-H_2O$ pour séparer des ions Ni et Co

Dans 50 mL d'une solution aqueuse à 18 wt% HCl, 0,065g de $NiCl_2$ et 0,12g de $CoCl_2.6H_2O$ (fournis par Alfa Aesar) ont été mélangés à 25 °C. Dans 1 mL de cette solution, ont été ajoutés 0.25 g de de $[P_{44414}][Cl]$. Le mélange était monophasique à 25°C, de couleur bleue. Le mélange a été chauffé à 50 °C, ce qui a induit la séparation de phase, à savoir :

- une phase supérieure bleue : la phase enrichie en liquide ionique $\varphi_{IL}$ comprenant le cobalt(II), et
- une phase inférieure presque incolore: la phase enrichie en eau $\varphi_W$ dans laquelle le nickel(II) est resté.

Le protocole suivi est illustré à la Figure 2. Les analyses ont été effectuées par spectroscopie d'absorption de flamme. Le coefficient de partage de l'ion métallique Co (II) entre les deux phases $\varphi_{IL}$ et $\varphi_W$ était

$$K(Co(II))_{Ti} = [Co(II)]\varphi_{IL}/[Co(II)]\varphi_W = 190$$

Le coefficient de partage de l'ion métallique Fe (III) entre les deux phases $\varphi_{IL}$ et $\varphi_W$ était

$$K(Ni(II))_{Ti} = [Ni(II)]\varphi_{IL}/[Ni(II)]\varphi_W = 0.14$$

Une séparation en une étape et quantitative du cobalt et du nickel a ainsi été réalisée, ce qui est un avantage par rapport aux procédés utilisés habituellement dans l'art antérieur. La séparation nickel-cobalt n'est pas efficace avec

les méthodes classiques et nécessite plusieurs étapes d'extraction consécutive pour obtenir une séparation quantitative des deux ions métalliques.

Exemple 4 : Utilisation d'un système biphasique $[P_{44414}][Cl]-HCl-H_2O$ pour séparer des ions Pt et Co

Le platine est connu comme métal noble qui ne se dissout qu'en solutions aqueuses très acides (typiquement dans l'eau régale : mélange d'acide chlorhydrique et d'acide nitrique concentrés dans une proportion de 2 à 4 volumes d'acide chlorhydrique pour 1 d'acide nitrique).

A 1 mL d'une solution aqueuse HCl 10M comprenant 0.005 M de Co(II) et 0.01 M de Pt(IV) ajoutés sous la forme de $H_2PtClO_6.3H_20$ et $CoCl_2.6H_2O$ (fournis par Alfa Aesar) à 25°C ont été introduits 0.25g de $[P_{44414}][Cl]$. Sans chauffer, une séparation de phase a leiu, à savoir :

- une phase supérieure verte : la phase enrichie en liquide ionique $\varphi_{IL}$ comprenant le cobalt(II) et le platine(IV), et
- une phase inférieure presque incolore: la phase enrichie en eau $\varphi_W$.

Le coefficient de partage de l'ion métallique Pt (IV) entre les deux phases $\varphi_{IL}$ et $\varphi_W$ était

$$K(Pt\ (IV))_{Ti} = [Pt\ (IV)]\varphi_{IL}/[\ Pt\ (IV)]\varphi_W > 100$$

$[P_{44414}][Cl]-HCl-H_2O$ a ainsi permis d'obtenir une extraction quantitative du platine et du cobalt vers la phase riche en liquide ionique $\varphi_{IL}$.

Les deux phases $\varphi_{IL}$ et $\varphi_W$ ont été séparées. A la phase enrichie en liquide ionique $\varphi_{IL}$ isolée ont été ajoutés 1,5 mL de solution aqueuse 1M HCl, ce qui a induit la précipitation du platine (sous forme d'un sel insoluble de $PtCl_6^{2-}$), car le platine n'est pas soluble dans une solution aqueuse si peu acide. Un mélange comprenant :

- un sel qui précipite au fond qui est constitué de $PtCl_6^{2-}$ et
- une seule phase liquide comprenant de l'eau, du cobalt, $[P_{44414}][Cl]$ et HCl,
  a été obtenu.

Le protocole suivi est illustré à la Figure 3.

## Revendications

**1.** - Procédé d'extraction d'un ion métallique M d'un milieu, comprenant les étapes de :

a) mettre en contact un liquide ionique de formule $C^+,(X^{p-})_{1/p}$, dans laquelle :

- $C^+$ est un cation onium comprenant au moins un atome choisi parmi N, S, P ou O, ledit cation onium comprenant au moins une chaîne hydrocarbonée $R^1$ comprenant de 6 à 20 atomes de carbone, éventuellement interrompue par un ou plusieurs groupes choisis parmi -S-, -O-, -(C=O)-O-, -O-(C=O)-, $-NR^{10}-(C=O)-$, $-(C=O)-NR^{11}-$ ou $-NR^{12}R^{13}-$, et/ou éventuellement substituée par un ou plusieurs groupes choisis parmi un halogène, $-OR^{14}$, $-(C=O)R^{15}$, $-(C=O)NR^{16}R^{17}-$, $-NR^{18}R^{19}R^{20}$, $-S-R^{21}$, $-(C=O)-OR^{22}$ , où $R^{10}$, $R^{11}$, $R^{12}$, $R^{13}$, $R^{14}$, $R^{15}$, $R^{16}$, $R^{17}$, $R^{18}$, $R^{19}$, $R^{20}$ et $R^{21}$ représentent indépendamment H ou une chaîne hydrocarbonée linéaire ou ramifiée comprenant de 1 à 6 atomes de carbone et $R^{22}$ représente une chaîne hydrocarbonée linéaire ou ramifiée comprenant de 1 à 6 atomes de carbone, et
- $X^{p-}$ est un anion de charge p,
ledit liquide ionique ayant une solubilité dans l'eau à 20°C d'au moins 10 g/L,
avec un milieu aqueux comprenant un ion métallique M et un acide, ce par quoi on obtient une composition à une température $T_i$, ladite composition comprenant une seule phase liquide,

b) faire varier la température pour obtenir une composition à une température $T_f$ différente de $T_i$ comprenant deux phases liquides $\varphi_{IL}$ et $\varphi_W$, la phase liquide $\varphi_{IL}$ étant une phase enrichie en liquide ionique et la phase liquide $\varphi_W$ étant une phase enrichie en eau, dont le pH est inférieur ou égal à 4,7,

sous réserve que, à la température $T_f$, le coefficient de partage de l'ion métallique entre les deux phases $\varphi_{IL}$ et $\varphi_W$ :

$$K(M)_{Tf} = [M]\varphi_{IL}/[M]\varphi_W$$

dans laquelle $[M]_{\varphi IL}$ est la concentration en M dans la phase $\varphi_{IL}$ à la température $T_f$ et $[M]\varphi_W$ est la concentration en M dans la phase $\varphi_W$ à la température $T_f$, soit supérieur à 1, de préférence supérieur à 1,1, notamment supérieur à 2, voire supérieur à 5, notamment supérieur à 10, typiquement supérieur à 100,

c) séparer les phases $\varphi_{IL}$ et $\varphi_W$ de la composition obtenue à l'étape b), puis
d) éventuellement extraire l'ion métallique M de la phase $\varphi_{IL}$.

**2.** Procédé de séparation d'ions métalliques $M_1$ et $M_2$, comprenant les étapes de :

a') mettre en contact un liquide ionique de formule $C^+,(X^{p-})_{1/p}$, dans laquelle :

- $C^+$ est un cation onium comprenant au moins un atome choisi parmi N, S, P ou O, ledit cation onium comprenant au moins une chaîne hydrocarbonée $R^1$ comprenant de 6 à 20 atomes de carbone, éventuellement interrompue par un ou plusieurs groupes choisis parmi -S-, -O-, -(C=O)-O-, -O-(C=O)-, $-NR^{10}$-(C=O)-, -(C=O)-$NR^{11}$- ou $-NR^{12}R^{13}$-, et/ou éventuellement substituée par un ou plusieurs groupes choisis parmi un halogène, $-OR^{14}$, -(C=O)$R^{15}$, -(C=O)$NR^{16}R^{17}$-, $-NR^{18}R^{19}R^{20}$, -S-$R^{21}$ , -(C=O)-$OR^{22}$ , où $R^{10}$, $R^{11}$, $R^{12}$, $R^{13}$, $R^{14}$, $R^{15}$, $R^{16}$, $R^{17}$, $R^{18}$, $R^{19}$, $R^{20}$ et $R^{21}$ représentent indépendamment H ou une chaîne hydrocarbonée linéaire ou ramifiée comprenant de 1 à 6 atomes de carbone et $R^{22}$ représente une chaîne hydrocarbonée linéaire ou ramifiée comprenant de 1 à 6 atomes de carbone, et
- $X^{p-}$ est un anion de charge p,

ledit liquide ionique ayant une solubilité dans l'eau à 20°C d'au moins 10 g/L, avec un milieu aqueux comprenant deux ions métalliques $M_1$ et $M_2$ (de natures différentes) et un acide, ce par quoi on obtient une composition à une température $T_i$, ladite composition comprenant une seule phase liquide,

b') faire varier la température pour obtenir une composition à une température $T_f$ différente de $T_i$ comprenant deux phases liquides $\varphi_{IL}$ et $\varphi_W$, la phase liquide $\varphi_{IL}$ étant une phase enrichie en liquide ionique et la phase liquide $\varphi_W$ étant une phase enrichie en eau, dont le pH est inférieur ou égal à 4,7,

sous réserve que, à la température $T_f$, le facteur de séparation $\beta(M_1/M_2)_{Tf}$ correspondant au rapport entre les coefficients de partage de $M_1$ et $M_2$

$$\beta(M_1/M_2)_{Tf} = K(M_1)_{Ti} / K(M_2)_{Tf} = ([M_1]\varphi_{IL}/[M_1]\varphi_W) / ([M_1]\varphi_{IL}/[M_1]\varphi_W)$$

dans laquelle :

- $K(M_1)_{Ti}$ est le coefficient de partage à la température $T_f$ de l'ion métallique $M_1$ entre les deux phases $\varphi_{IL}$ et $\varphi_W$, avec $K(M_1)_{Tf} = [M1]\varphi_{IL}/[M1]\varphi_W$,
- $K(M_2)_{Tf}$ est le coefficient de partage à la température $T_f$ de l'ion métallique $M_2$ entre les deux phases $\varphi_{IL}$ et $\varphi_W$, avec $K(M_2)_{Tf} = [M_2]\varphi_{IL}/[M_2]\varphi_W$
- $[M_1]\varphi_{IL}$ est la concentration en $M_1$ dans la phase $\varphi_{IL}$ à la température $T_f$ et $[M_1]\varphi_W$ est la concentration en $M_1$ dans la phase $\varphi_W$ à la température $T_f$,
- $[M_2]\varphi_{IL}$ est la concentration en $M_2$ dans la phase $\varphi_{IL}$ à la température $T_f$ et $[M_2]\varphi_W$ est la concentration en $M_2$ dans la phase $\varphi_W$ à la température $T_f$,

soit supérieur à 1, de préférence supérieur à 1,1, notamment supérieur à 2, voire supérieur à 5, notamment supérieur à 10, typiquement supérieur à 100,

c') séparer les phases $\varphi_{IL}$ et $\varphi_W$ de la composition obtenue à l'étape b'), puis
d') éventuellement extraire l'ion métallique $M_1$ de la phase $\varphi_{IL}$,
e') éventuellement extraire l'ion métallique $M_2$ de la phase $\varphi_W$.

**3.** - Procédé de séparation d'ions métalliques $M_1$ et $M_2$ comprenant les étapes de :

a") mettre en contact un liquide ionique de formule $C^+,(X^{p-})_{1/p}$, dans laquelle :

- $C^+$ est un cation onium comprenant au moins un atome choisi parmi N, S, P ou O, ledit cation onium comprenant au moins une chaîne hydrocarbonée $R^1$ comprenant de 6 à 20 atomes de carbone, éventuellement interrompue par un ou plusieurs groupes choisis parmi -S-, -O-, -(C=O)-O-, -O-(C=O)-, $-NR^{10}-(C=O)-$, $-(C=O)-NR^{11}-$ ou $-NR^{12}R^{13}-$, et/ou éventuellement substituée par un ou plusieurs groupes choisis parmi un halogène, $-OR^{14}$, $-(C=O)R^{15}$, $-(C=O)NR^{16}R^{17}-$, $-NR^{18}R^{19}R^{20}$, $-S-R^{21}$, $-(C=O)-OR^{22}$ , où $R^{10}$, $R^{11}$, $R^{12}$, $R^{13}$, $R^{14}$, $R^{15}$, $R^{16}$, $R^{17}$, $R^{18}$, $R^{19}$, $R^{20}$ et $R^{21}$ représentent indépendamment H ou une chaîne hydrocarbonée linéaire ou ramifiée comprenant de 1 à 6 atomes de carbone et $R^{22}$ représente une chaîne hydrocarbonée linéaire ou ramifiée comprenant de 1 à 6 atomes de carbone, et
- $X^{p-}$ est un anion de charge p,

ledit liquide ionique ayant une solubilité dans l'eau à 20°C d'au moins 10 g/L,
avec un milieu aqueux comprenant un acide et deux ions métalliques $M_1$ et $M_2$ (de natures différentes), ce par quoi on obtient une composition à une température $T_i$, ladite composition comprenant :

- soit une seule phase liquide,
- soit deux phases liquides $\varphi_{IL}$ et $\varphi_W$, la phase liquide $\varphi_{IL}$ étant une phase enrichie en liquide ionique et la phase liquide $\varphi_W$ étant une phase enrichie en eau, dont le pH est inférieur ou égal à 4,7,

sous réserve que, à la température $T_i$ :

- le coefficient de partage de l'ion métallique $M_1$ entre les deux phases $\varphi_{IL}$ et $\varphi_W$ :

$$K(M_1)_{Ti} = [M_1]\varphi_{IL}/[M_1]\varphi_W$$

soit supérieur à 1, de préférence supérieur à 1,1, notamment supérieur à 2, voire supérieur à 5, notamment supérieur à 10, typiquement supérieur à 100,
- le coefficient de partage de l'ion métallique $M_2$ entre les deux phases $\varphi_{IL}$ et $\varphi_W$ :

$$K(M_2)_{Ti} = [M_2]\varphi_{IL}/[M_2]\varphi_W$$

soit supérieur à 1, de préférence supérieur à 1,1, notamment supérieur à 2, voire supérieur à 5, notamment supérieur à 10, typiquement supérieur à 100,

b") lorsqu'une composition comprenant une seule phase liquide est obtenue à l'étape a"), faire varier la température pour obtenir une composition à une température $T_f$ différente de $T_i$ comprenant deux phases liquides $\varphi_{IL}$ et $\varphi_W$, la phase liquide $\varphi_{IL}$ étant une phase enrichie en liquide ionique et la phase liquide $\varphi_W$ étant une phase enrichie en eau, dont le pH est inférieur ou égal à 4,7, sous réserve que, à la température $T_f$ :

- le coefficient de partage de l'ion métallique $M_1$ entre les deux phases $\varphi_{IL}$ et $\varphi_W$ :

$$K(M_1)_{Tf} = [M_1]\varphi_{IL}/[M_1]\varphi_W$$

soit supérieur à 1, de préférence supérieur à 1,1, notamment supérieur à 2, voire supérieur à 5, notamment supérieur à 10, typiquement supérieur à 100,
- le coefficient de partage de l'ion métallique $M_2$ entre les deux phases $\varphi_{IL}$ et $\varphi_W$ :

$$K(M_2)_{Tf} = [M_2]\varphi_{IL}/[M_2]\varphi_W$$

soit supérieur à 1, de préférence supérieur à 1,1, notamment supérieur à 2, voire supérieur à 5, notamment supérieur à 10, typiquement supérieur à 100,

c") séparer les phases $\varphi_{IL}$ et $\varphi_W$ de la composition obtenue à l'étape a") ou b"), puis
d") mettre en contact, à une température $T_\Omega$, la phase $\varphi_{IL}$ avec une solution aqueuse telle que :

- la solubilité dans ladite solution aqueuse à la température $T_\Omega$ de $M_1$ est supérieure ou égale 0,01 mol/L,
- la solubilité dans ladite solution aqueuse à la température $T_\Omega$ de $M_2$ est inférieure ou égale à 0,001 mol/L,

ce par quoi $M_2$ précipite et on obtient un milieu $\Omega$ comprenant un solide comprenant $M_2$ et au moins une phase liquide comprenant $M_1$,
e") éventuellement filtrer le milieu $\Omega$ pour récupérer le solide comprenant $M_2$,
f") éventuellement extraire l'ion métallique $M_1$ de la phase liquide.

**4.** - Procédé de purification d'une solution aqueuse acide comprenant un ion métallique M comprenant les étapes de :

i) mettre en contact un liquide ionique de formule $C^+,(X^{p-})_{1/p}$, dans laquelle :

- $C^+$ est un cation onium comprenant au moins un atome choisi parmi N, S, P ou O, ledit cation onium comprenant au moins une chaîne hydrocarbonée $R^1$ comprenant de 6 à 20 atomes de carbone, éventuellement interrompue par un ou plusieurs groupes choisis parmi -S-, -O-, -(C=O)-O-, -O-(C=O)-, $-NR^{10}-(C=O)-$, $-(C=O)-NR^{11}-$ ou $-NR^{12}R^{13}-$, et/ou éventuellement substituée par un ou plusieurs groupes choisis parmi un halogène, $-OR^{14}$, $-(C=O)R^{15}$, $-(C=O)NR^{16}R^{17}-$, $-NR^{18}R^{19}R^{20}$, $-S-R^{21}$, $-(C=O)-OR^{22}$, où $R^{10}$, $R^{11}$, $R^{12}$, $R^{13}$, $R^{14}$, $R^{15}$, $R^{16}$, $R^{17}$, $R^{18}$, $R^{19}$, $R^{20}$ et $R^{21}$ représentent indépendamment H ou une chaîne hydrocarbonée linéaire ou ramifiée comprenant de 1 à 6 atomes de carbone et $R^{22}$ représente une chaîne hydrocarbonée linéaire ou ramifiée comprenant de 1 à 6 atomes de carbone, et
- $X^{p-}$ est un anion de charge p,
ledit liquide ionique ayant une solubilité dans l'eau à 20°C d'au moins 10 g/L,

avec une solution aqueuse S comprenant un ion métallique M à une concentration $[M]_S$ et un acide, ce par quoi on obtient une composition à une température $T_i$, ladite composition comprenant une seule phase liquide,
ii) faire varier la température pour obtenir une composition à une température $T_f$ différente de $T_i$ comprenant deux phases liquides $\varphi_{IL}$ et $\varphi_W$, la phase liquide $\varphi_{IL}$ étant une phase enrichie en liquide ionique et la phase liquide $\varphi_W$ étant une phase enrichie en eau, dont le pH est inférieur ou égal à 4,7, sous réserve que, à la température $T_f$, le coefficient de partage de l'ion métallique entre les deux phases $\varphi_{IL}$ et $\varphi_W$ :

$$K(M)_{Tf} = [M]\varphi_{IL}/[M]\varphi_W$$

soit supérieur à 1, de préférence supérieur à 1,1, notamment supérieur à 2, voire supérieur à 5, notamment supérieur à 10, typiquement supérieur à 100,
iii) séparer les phases $\varphi_{IL}$ et $\varphi_W$ de la composition obtenue à l'étape ii), ce par quoi on obtient une phase $\varphi_W$ qui est une solution aqueuse acide dont la concentration en ion métallique M $[M]\varphi_W$ est inférieure à la concentration $[M]_S$.

**5.** - Procédé selon la revendication 1, comprenant avant l'étape a), une étape $a_0)$ de préparation du milieu aqueux comprenant un ion métallique M et un acide par lixiviation.

**6.** - Procédé selon l'une quelconque des revendications 1 à 5, dans lequel le liquide ionique a l'une des formules suivantes :

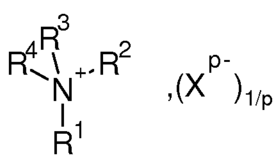
(I),
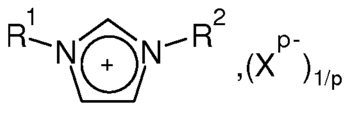
(II),
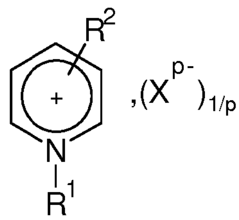

(III), 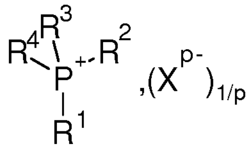 (IV) ou 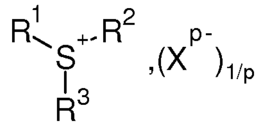 (V),

dans lesquelles :

- $R^1$ et $X^{p-}$ sont tels que définis à la revendication 1,
- $R^2$, $R^3$ et $R^4$ représentent indépendamment une chaîne hydrocarbonée comprenant de 1 à 20 atomes de carbone, éventuellement interrompue par un ou plusieurs groupes choisis parmi -S-, -O-, -(C=O)-O-, -O-(C=O)-, $-NR^{110}$-(C=O)-, -(C=O)-$NR^{111}$- ou $-NR^{112}R^{113}$-, et/ou éventuellement substituée par un ou plusieurs groupes choisis parmi un halogène, $-OR^{114}$, $-(C=O)R^{115}$, $-(C=O)NR^{116}R^{117}$-, $-NR^{118}R^{119}R^{120}$, $-S-R^{121}$, $-(C=O)-OR^{122}$, où $R^{110}$, $R^{111}$, $R^{112}$, $R^{113}$, $R^{114}$, $R^{115}$, $R^{116}$, $R^{117}$, $R^{118}$, $R^{119}$, $R^{120}$, $R^{121}$ et $R^{122}$ représentent indépendamment H ou une chaîne hydrocarbonée linéaire ou ramifiée comprenant de 1 à 6 atomes de carbone,

étant entendu que deux groupes choisis parmi $R^1$, $R^2$, $R^3$ et $R^4$ peuvent être reliés pour former un cycle.

**7.** - Procédé selon la revendication 6 dans lequel la chaine $R^1$ comprend au moins 8, notamment au moins 10, typiquement au moins 12, par exemple au moins 14 atomes de carbone.

**8.** - Procédé selon l'une quelconque des revendications 5 à 7, dans lequel le cation $C^+$ comprend, en plus de la chaîne hydrocarbonée $R^1$, une chaîne hydrocarbonée $R^2$ comprenant de 2 à 20 atomes de carbone, notamment de 4 à 20 atomes de carbone éventuellement interrompue par un ou plusieurs groupes choisis parmi -S-, -O-, -(C=O)-O-, -O-(C=O)-, $-NR^{210}$-(C=O)-, -(C=O)-$NR^{211}$- ou $-NR^{212}R^{213}$-, et/ou éventuellement substituée par un ou plusieurs groupes choisis parmi un halogène, $-OR^{214}$, $-(C=O)R^{215}$, $-(C=O)NR^{216}R^{217}$-, $-NR^{218}R^{219}R^{220}$, $-S-R^{221}$, $-(C=O)-OR^{222}$, où $R^{210}$, $R^{211}$ , $R^{212}$, $R^{213}$, $R^{214}$, $R^{215}$, $R^{216}$, $R^{217}$, $R^{218}$, $R^{219}$, $R^{220}$, $R^{221}$ et $R^{222}$ représentent indépendamment H ou une chaîne hydrocarbonée linéaire ou ramifiée comprenant de 1 à 6 atomes de carbone, les groupes $R^1$ et $R^2$ pouvant être reliés pour former un cycle.

**9.** - Procédé selon l'une quelconque des revendications 5 à 8, dans lequel le liquide ionique a d'une des formules (X), (XI), (XII), (XIII) ou (XIV) suivantes :

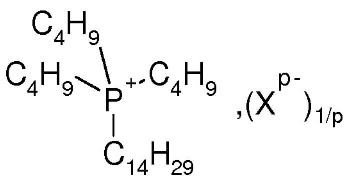 (X), 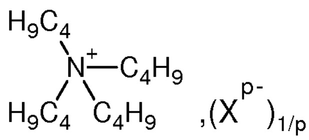 (XI),

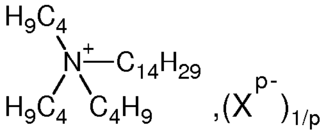 (XII), 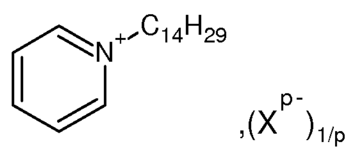 (XIII),

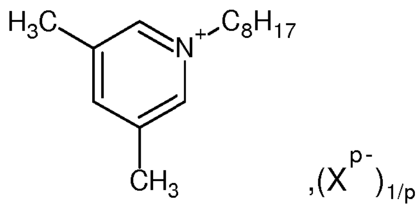 (XIV)

dans lesquelles $X^{p-}$ est un anion de charge p.

**10.** - Procédé selon l'une quelconque des revendications 5 à 9, dans lequel l'anion $X^{p-}$ est choisi parmi les anions $BF_4^-$, $PF_6^-$, $CF_3SO_3^-$, $HSO_4^-$, $SO_4^{2-}$, $NO_3^-$, $CH_3COO^-$, $CF_3CO_2^-$, $ClO_4^-$, $HPO_4^{2-}$, $H_2PO_4^-$, les halogénures, les anions $BR^5{}_4^-$, $RCO_2^-$ ou $R^5SO_3^-$, $R^5$ étant un groupe alkyle linéaire ou ramifié comprenant de 1 à 4 atomes de carbone, de préférence un méthyle.

**11.** - Procédé selon l'une quelconque des revendications 1 à 10, dans lequel le pH de la phase enrichie en eau $\varphi_W$ est inférieur à 4,0, typiquement inférieur à 3,0, voire inférieur à 2,0, de préférence inférieur à 1,5, de manière particulièrement préférée inférieur à 1,0, par exemple inférieur à 0,5, notamment inférieur à 0,2.

**12.** - Procédé selon l'une quelconque des revendications 1 à 11, dans lequel l'acide est :

- un acide organique choisi parmi l'acide formique, l'acide acétique, l'acide oxalique, l'acide lactique, l'acide urique, l'acide p-toluenesulfonique, l'acide trifluorométhanesulfonique ou un mélange de ceux-ci,
- un acide inorganique choisi parmi l'acide chlorhydrique, l'acide sulfurique, l'acide nitrique, l'acide phosphorique ou un mélange de ceux-ci,
- ou un mélange de ceux-ci.

**13.** - Procédé selon l'une quelconque des revendications 5 à 12, dans lequel l'acide a la formule $H_p(X^{p-})$, où est $X^{p-}$ est l'anion de charge p du liquide ionique de la composition.

## Patentansprüche

**1.** Verfahren zur Extraktion eines Metallions M aus einem Medium, umfassend die folgenden Schritte:

a) Inkontaktbringen einer ionischen Flüssigkeit von Formel $C^+,(X^{p-})_{1/p}$, wobei:

- $C^+$ ein Onium-Kation ist, umfassend mindestens ein Atom, ausgewählt aus N, S, P oder O, das Onium-Kation umfassend mindestens eine Kohlenwasserstoffkette $R^1$, umfassend von 6 bis 20 Kohlenstoffatome, optional unterbrochen durch eine oder mehrere Gruppen, ausgewählt aus -S-, -O-, -(C=O)-O-, -O-(C=O)-, $-NR^{10}$-(C=O)-, -(C=O)-$NR^{11}$- oder $-NR^{12}R^{13}$-, und/oder optional substituiert durch eine oder mehrere Gruppen, ausgewählt aus einem Halogen, $-OR^{14}$, -(C=O)$R^{15}$, - (C=O)$NR^{16}R^{17}$- , $-NR^{18}R^{19}R^{20}$ , -S-$R^{21}$, -(C=O)-$OR^{22}$ , wobei $R^{10}$, $R^{11}$, $R^{12}$, $R^{13}$, $R^{14}$, $R^{15}$, $R^{16}$, $R^{17}$, $R^{18}$, $R^{19}$, $R^{20}$ und $R^{21}$ unabhängig H oder eine lineare oder verzweigte Kohlenwasserstoffkette mit 1 bis 6 Kohlenstoffatomen darstellen und $R^{22}$ eine lineare oder verzweigte Kohlenwasserstoffkette mit 1 bis 6 Kohlenstoffatomen darstellt, und
- $X^{p-}$ ein Anion mit Ladung p ist,

wobei die ionische Flüssigkeit eine Löslichkeit in Wasser bei 20 °C von mindestens 10 g/L
mit einem wässrigen Medium aufweist, das ein Metallion M und eine Säure umfasst, wodurch eine Zusammensetzung bei einer Temperatur $T_i$ erlangt wird; die Zusammensetzung umfassend eine einzelne flüssige Phase,

b) Variieren der Temperatur, um eine Zusammensetzung bei einer Temperatur $T_f$ zu erlangen, die von $T_i$ verschieden ist, umfassend zwei flüssige Phasen $\varphi_{IL}$ und $\varphi_w$, wobei die flüssige Phase $\varphi_{IL}$ eine mit ionischer Flüssigkeit angereicherte Phase ist und die flüssige Phase $\varphi_w$ eine mit Wasser angereicherte Phase ist, deren pH kleiner als oder gleich wie 4,7 ist,

unter der Voraussetzung, dass der Verteilungskoeffizient des Metallions bei der Temperatur $T_f$ zwischen den zwei Phasen $\varphi_{IL}$ und $\varphi_w$ wie folgt ist:

$$K(M)_{Tf} = [M]\varphi_{IL}/[M]\varphi_w$$

wobei $[M]\varphi_{IL}$ die Konzentration von M in der Phase $\varphi_{IL}$ bei der Temperatur $T_f$ ist und $[M]\varphi_w$ die Konzentration von M in der Phase $\varphi_w$ bei der Temperatur $T_f$ ist,
größer als 1, vorzugsweise größer als 1,1, insbesondere größer als 2 oder sogar größer als 5, insbesondere größer als 10, normalerweise größer als 100, ist,

c) Trennen der Phasen $\varphi_{IL}$ und $\varphi_w$ der in Schritt b) erlangten Zusammensetzung, dann

d) optional Extrahieren des Metallions M aus der Phase $\varphi_{IL.}$

**2.** Verfahren zum Trennen von Metallionen $M_1$ und $M_2$, umfassend die folgenden Schritte:

a') Inkontaktbringen einer ionischen Flüssigkeit von Formel $C^+,(X^{p-})_{1/p}$, wobei:

- $C^+$ ein Onium-Kation ist, umfassend mindestens ein Atom, ausgewählt aus N, S, P oder O, das Onium-Kation umfassend mindestens eine Kohlenwasserstoffkette $R^1$, umfassend von 6 bis 20 Kohlenstoffatome, optional unterbrochen durch eine oder mehrere Gruppen, ausgewählt aus -S-, -O-, -(C=O)-O-, -O-(C=O)-, $-NR^{10}$-(C=O)-, -(C=O)-$NR^{11}$- oder $-NR^{12}R^{13}$-, und/oder optional substituiert durch eine oder mehrere Gruppen, ausgewählt aus einem Halogen, $-OR^{14}$, -(C=O)$R^{15}$, - (C=O)$NR^{16}R^{17}$- , $-NR^{18}R^{19}R^{20}$ , $-S-R^{21}$, -(C=O)-$OR^{22}$ , wobei $R^{10}$, $R^{11}$, $R^{12}$, $R^{13}$, $R^{14}$, $R^{15}$, $R^{16}$, $R^{17}$, $R^{18}$, $R^{19}$, $R^{20}$ und $R^{21}$ unabhängig H oder eine lineare oder verzweigte Kohlenwasserstoffkette mit 1 bis 6 Kohlenstoffatomen darstellen und $R^{22}$ eine lineare oder verzweigte Kohlenwasserstoffkette mit 1 bis 6 Kohlenstoffatomen darstellt, und
- $X^{p-}$ ein Anion mit Ladung p ist,

wobei die ionische Flüssigkeit eine Löslichkeit in Wasser bei 20 °C von mindestens 10 g/L mit einem wässrigen Medium, umfassend zwei Metallionen $M_1$ und $M_2$ (unterschiedlicher Natur) und eine Säure, aufweist, wodurch eine Zusammensetzung bei einer Temperatur $T_i$ erlangt wird; die Zusammensetzung umfassend eine einzige flüssige Phase,

b') Variieren der Temperatur, um eine Zusammensetzung bei einer Temperatur $T_f$ zu erlangen, die von $T_i$ verschieden ist, umfassend zwei flüssige Phasen $\varphi_{IL}$ und $\varphi_w$, wobei die flüssige Phase $\varphi_{IL}$ eine mit ionischer Flüssigkeit angereicherte Phase ist und die flüssige Phase $\varphi_w$ eine mit Wasser angereicherte Phase ist, deren pH kleiner als oder gleich wie 4,7 ist,

unter der Voraussetzung, dass bei der Temperatur $T_f$ der Trennfaktor $\beta(M_1/M_2)_{Tf}$, der dem Verhältnis zwischen den Verteilungskoeffizienten von $M_1$ und $M_2$ entspricht

$$\beta(M_1/M_2)_{Tf} = K(M_1)_{Ti}/ K(M_2)_{Tf} = ([M_1]\varphi_{IL}/[M_1]\varphi_w) / ([M_1]\varphi_{IL}/[M_1]\varphi_w)$$

wobei:

- $K(M_1)_{Ti}$ der Verteilungskoeffizient bei der Temperatur $T_f$ des Metallions $M_1$ zwischen den zwei Phasen $\varphi_{IL}$ und $\varphi_w$ ist, wobei $K(M_1)_{Tf=}[M_1]cp_{IL}/[M_1]\varphi_w$,
- $K(M_2)_{Tf}$ der Verteilungskoeffizient bei der Temperatur $T_f$ des Metallions $M_2$ zwischen den zwei Phasen $\varphi_{IL}$ et $\varphi_w$ ist, wobei $K(M_2)_{Tf\,=}\,[M_2]_{\varphi IL}/[M_2]\varphi_w$
- $[M_1]\varphi_{IL}$ die Konzentration von $M_1$ in der Phase $\varphi_{IL}$ bei der Temperatur $T_f$ ist und $[M_1]\varphi_w$ die Konzentration von $M_1$ in der Phase $\varphi_w$ bei der Temperatur $T_f$ ist,
- $[M_2]\varphi_{IL}$ die Konzentration von $M_2$ in der Phase $\varphi_{IL}$ bei der Temperatur $T_f$ ist und $[M_2]\varphi_w$ die Konzentration von $M_2$ in der Phase $\varphi_w$ bei der Temperatur $T_f$ ist, größer als 1, vorzugsweise größer als 1,1, insbesondere größer als 2 oder sogar größer als 5, insbesondere größer als 10, normalerweise größer als 100, ist,

c') Trennen der Phasen $\varphi_{IL}$ und $\varphi_w$ der in Schritt b') erlangten Zusammensetzung, dann

d') optional Extrahieren des Metallions $M_1$ aus der Phase $\varphi_{IL}$,

e') optional Extrahieren des Metallions $M_2$ aus der Phase $\varphi_w$.

**3.** Verfahren zum Trennen von Metallionen $M_1$ und $M_2$, umfassend die folgenden Schritte:

a") Inkontaktbringen einer ionischen Flüssigkeit von Formel $C^+,(X^{p-})_{1/p}$, wobei:

- $C^+$ ein Onium-Kation ist, umfassend mindestens ein Atom, ausgewählt aus N, S, P oder O, das Onium-Kation umfassend mindestens eine Kohlenwasserstoffkette $R^1$, umfassend von 6 bis 20 Kohlenstoffatome, optional unterbrochen durch eine oder mehrere Gruppen, ausgewählt aus -S-, -O-, -(C=O)-O-, -O-(C=O)-, $-NR^{10}$-(C=O)-, - (C=O)-$NR^{11}$- oder $-NR^{12}R^{13}$-, und/oder optional substituiert durch eine oder mehrere Gruppen, ausgewählt aus einem Halogen, $-OR^{14}$, -(C=O)$R^{15}$, -(C=O)$NR^{16}R^{17}$-, - $NR^{18}R^{19}R^{20}$ , $-S-R^{21}$, -(C=O)-$OR^{22}$ , wobei $R^{10}$, $R^{11}$, $R^{12}$, $R^{13}$, $R^{14}$, $R^{15}$, $R^{16}$, $R^{17}$, $R^{18}$, $R^{19}$, $R^{20}$ und $R^{21}$ unabhängig H oder eine lineare oder verzweigte Kohlenwasserstoffkette mit 1 bis 6 Kohlenstoffatomen darstellen und $R^{22}$ eine

lineare oder verzweigte Kohlenwasserstoffkette mit 1 bis 6 Kohlenstoffatomen darstellt, und
- $X^{p-}$ ein Anion mit Ladung p ist,

wobei die ionische Flüssigkeit eine Löslichkeit in Wasser bei 20 °C von mindestens 10 g/L mit einem wässrigen Medium, umfassend eine Säure und zwei Metallionen $M_1$ und $M_2$ (unterschiedlicher Natur), aufweist, wodurch eine Zusammensetzung bei einer Temperatur $T_i$ erlangt wird; die Zusammensetzung umfassend:

- eine einzige flüssige Phase,
- zwei flüssige Phasen $\varphi_{IL}$ und $\varphi_w$, wobei die flüssige Phase $\varphi_{IL}$ eine mit ionischer Flüssigkeit angereicherte Phase ist und die flüssige Phase $\varphi_w$ eine mit Wasser angereicherte Phase ist, deren pH kleiner als oder gleich wie 4,7 ist,

unter der Voraussetzung, dass bei der Temperatur $T_i$:

- der Verteilungskoeffizient des Metallions $M_1$ zwischen den zwei Phasen $\varphi_{IL}$ und $\varphi_w$ wie folgt ist:

$$K(M_1)_{Ti}= [M_1]\varphi_{IL}/[M_1]\varphi_w$$

größer als 1, vorzugsweise größer als 1,1, insbesondere größer als 2 oder sogar größer als 5, insbesondere größer als 10, normalerweise größer als 100, ist,
- der Verteilungskoeffizient des Metallions $M_2$ zwischen den zwei Phasen $\varphi_{IL}$ und $\varphi_w$ wie folgt ist:

$$K(M_2)_{Ti} = [M_2]\varphi_{IL}/[M_2]\varphi_w$$

größer als 1, vorzugsweise größer als 1,1, insbesondere größer als 2 oder sogar größer als 5, insbesondere größer als 10, normalerweise größer als 100, ist,

b") wenn in Schritt a") eine Zusammensetzung erlangt wird, umfassend eine einzige flüssige Phase, Variieren der Temperatur, um eine Zusammensetzung bei einer Temperatur $T_f$ zu erlangen, die von Ti verschieden ist, umfassend zwei flüssige Phasen $\varphi_{IL}$ und $\varphi_w$, wobei die flüssige Phase $\varphi_{IL}$ eine mit ionischer Flüssigkeit angereicherte Phase ist und die flüssige Phase $\varphi_w$ eine mit Wasser angereicherte Phase ist, deren pH kleiner als oder gleich wie 4,7 ist, unter der Voraussetzung, dass bei der Temperatur $T_f$:

- der Verteilungskoeffizient des Metallions $M_1$ zwischen den zwei Phasen $\varphi_{IL}$ und $\varphi_w$ wie folgt ist:

$$K(M_1)_{Tf}= [M_1]\varphi_{IL}/[M_1]\varphi_w$$

größer als 1, vorzugsweise größer als 1,1, insbesondere größer als 2 oder sogar größer als 5, insbesondere größer als 10, normalerweise größer als 100, ist,
- der Verteilungskoeffizient des Metallions $M_2$ zwischen den zwei Phasen $\varphi_{IL}$ und $\varphi_w$ wie folgt ist:

$$K(M_2)_{Tf} = [M_2]\varphi_{IL}/[M_2]\varphi_w$$

größer als 1, vorzugsweise größer als 1,1, insbesondere größer als 2 oder sogar größer als 5, insbesondere größer als 10, normalerweise größer als 100, ist,

c") Trennen der Phasen $\varphi_{IL}$ und $\varphi_w$ der in Schritt a") oder b") erlangten Zusammensetzung, dann
d") Inkontaktbringen, bei einer Temperatur $T_\Omega$ der Phase $\varphi_{IL}$ mit einer wässrigen Lösung, sodass:

- die Löslichkeit in der wässrigen Lösung bei der Temperatur $T_\Omega$ von $M_1$ größer als oder gleich wie 0,01 mol/l ist,
- die Löslichkeit in der wässrigen Lösung bei der Temperatur $T_\Omega$ von $M_2$ kleiner als oder gleich wie 0,001 mol/l ist,

wodurch $M_2$ präzipitiert und ein Medium $\Omega$ erlangt wird, umfassend einen Feststoff, umfassend $M_2$, und mindestens eine flüssige Phase, umfassend $M_1$;
e") optional Filtern des Mediums $\Omega$, um den Feststoff zu gewinnen, der $M_2$ umfasst,
f") optional Extrahieren des Metallions $M_1$ aus der flüssigen Phase.

**4.** Verfahren zur Aufreinigung einer sauren wässrigen Lösung, umfassend ein Metallion M, umfassend die folgenden Schritte:

i) Inkontaktbringen einer ionischen Flüssigkeit von Formel $C^+,(X^{p-})_{1/p}$, wobei:

- $C^+$ ein Onium-Kation ist, umfassend mindestens ein Atom, ausgewählt aus N, S, P oder O, das Onium-Kation umfassend mindestens eine Kohlenwasserstoffkette $R^1$, umfassend von 6 bis 20 Kohlenstoffatome, optional unterbrochen durch eine oder mehrere Gruppen, ausgewählt aus -S-, -O-, -(C=O)-O-, -O-(C=O)-, $-NR^{10}$-(C=O)-, - (C=O)-$NR^{11}$- oder $-NR^{12}R^{13}$-, und/oder optional substituiert durch eine oder mehrere Gruppen, ausgewählt aus einem Halogen, $-OR^{14}$, -(C=O)$R^{15}$, -(C=O)$NR^{16}R^{17}$-, - $NR^{18}R^{19}R^{20}$, -S-$R^{21}$, -(C=O)-$OR^{22}$, wobei $R^{10}$, $R^{11}$, $R^{12}$, $R^{13}$, $R^{14}$, $R^{15}$, $R^{16}$, $R^{17}$, $R^{18}$, $R^{19}$, $R^{20}$ und $R^{21}$ unabhängig H oder eine lineare oder verzweigte Kohlenwasserstoffkette mit 1 bis 6 Kohlenstoffatomen darstellen und $R^{22}$ eine lineare oder verzweigte Kohlenwasserstoffkette mit 1 bis 6 Kohlenstoffatomen darstellt, und
- $X^{p-}$ ein Anion mit Ladung p ist,

wobei die ionische Flüssigkeit eine Löslichkeit in Wasser bei 20 °C von mindestens 10 g/L
mit einer wässrigen Lösung S, umfassend ein Metallion M mit einer Konzentration von $[M]_s$ und eine Säure, wodurch eine Zusammensetzung bei einer Temperatur $T_i$ erlangt wird; die Zusammensetzung umfassend eine einzelne flüssige Phase,

ii) Variieren der Temperatur, um eine Zusammensetzung bei einer Temperatur $T_f$ zu erlangen, die von $T_i$ verschieden ist, umfassend zwei flüssige Phasen $\varphi_{IL}$ und $\varphi_w$, wobei die flüssige Phase $\varphi_{IL}$ eine mit ionischer Flüssigkeit angereicherte Phase ist und die flüssige Phase $\varphi_w$ eine mit Wasser angereicherte Phase ist, deren pH kleiner als oder gleich wie 4,7 ist, unter der Voraussetzung, dass bei der Temperatur $T_f$: der Verteilungskoeffizient des Metallions zwischen den zwei Phasen $\varphi_{IL}$ et $\varphi_w$ wie folgt ist:

$$K(M)_{Tf} = [M]\varphi_{IL}/[M]\varphi_w$$

größer als 1, vorzugsweise größer als 1,1, insbesondere größer als 2 oder sogar größer als 5, insbesondere größer als 10, normalerweise größer als 100, ist,
iii) Trennen der Phasen $\varphi_{IL}$ und $\varphi_w$ der in Schritt ii) erlangten Zusammensetzung, wodurch eine Phase $\varphi_w$ erlangt wird, die eine saure wässrige Lösung ist, deren Konzentration an Metallionen M $[M]\varphi_w$ geringer ist als die Konzentration $[M]_s$.

**5.** Verfahren nach Anspruch 1, umfassend vor Schritt a) einen Schritt $a_0$) zur Herstellung des wässrigen Mediums, umfassend ein Metallion M und eine Säure, durch Auslaugen.

**6.** Verfahren nach einem der Ansprüche 1 bis 5, wobei die ionische Flüssigkeit mindestens einer der folgenden Formeln entspricht:

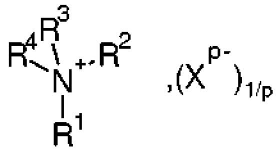

(I),

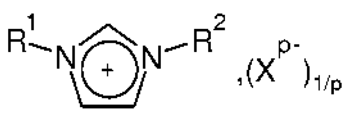

(II)

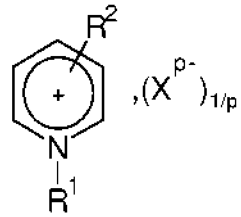

(III) 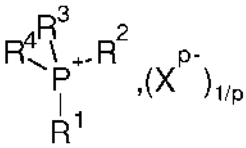 (IV) od er 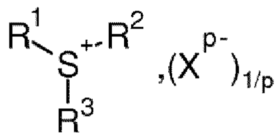 (V),

wobei:

- $R^1$ und $X^{p-}$ wie definiert in Anspruch 1 sind,
- $R^2$, $R^3$ und $R^4$ unabhängig eine Kohlenwasserstoffkette darstellen, umfassend 1 bis 20 Kohlenstoffatome, optional unterbrochen durch eine oder mehrere Gruppen, ausgewählt aus -S-, -O-, -(C=O)-O-, -O-(C=O)-, $-NR^{110}$-(C=O)-, -(C=O)-$NR^{111}$- oder $-NR^{112}R^{113}$-, und/oder optional substituiert durch eine oder mehrere Gruppen, ausgewählt aus Halogen,-$OR^{114}$, -(C=O)$R^{115}$, -(C=O)$NR^{116}R^{117}$-, $-NR^{118}R^{119}R^{120}$, -S-$R^{121}$, -(C=O)-$OR^{122}$, wobei $R^{110}$, $R^{111}$, $R^{112}$, $R^{113}$, $R^{114}$, $R^{115}$, $R^{116}$, $R^{117}$, $R^{118}$, $R^{119}$, $R^{120}$, $R^{121}$ und $R^{122}$ unabhängig H oder eine lineare oder verzweigte Kohlenwasserstoffkette darstellen, umfassend 1 bis 6 Kohlenstoffatome,

wobei es sich versteht, dass zwei Gruppen, ausgewählt aus $R^1$, $R^2$, $R^3$ und $R^4$, miteinander verbunden sein können, um einen Ring zu bilden.

**7.** Verfahren nach Anspruch 6, wobei die Kette $R^1$ mindestens 8, insbesondere mindestens 10, normalerweise mindestens 12, beispielsweise mindestens 14 Kohlenstoffatome umfasst.

**8.** Verfahren nach einem der Ansprüche 5 bis 7, wobei das Kation $C^+$ zusätzlich zu der Kohlenwasserstoffkette $R^1$ eine Kohlenwasserstoffkette $R^2$ umfassend von 2 bis 20 Kohlenstoffatome, insbesondere von 4 bis 20 Kohlenstoffatome, umfasst, optional unterbrochen durch eine oder mehrere Gruppen, ausgewählt aus -S-, -O-, -(C=O)- O-, -O-(C=O)-, $-NR^{210}$-(C=O)-, -(C=O)-$NR^{211}$- oder $-NR^{212}R^{213}$-, und/oder optional substituiert durch eine oder mehrere Gruppen, ausgewählt aus Halogen, -$OR^{214}$, -(C=O)$R^{215}$, -(C=O)$NR^{216}R^{217}$-, $-NR^{218}R^{219}R^{220}$, -S-$R^{221}$, -(C=O)-$OR^{222}$, wobei $R^{210}$, $R^{211}$, $R^{212}$, $R^{213}$, $R^{214}$, $R^{215}$, $R^{216}$, $R^{217}$, $R^{218}$, $R^{219}$, $R^{220}$, $R^{221}$ und $R^{222}$ unabhängig H oder eine lineare oder verzweigte Kohlenwasserstoffkette darstellen, umfassend 1 bis 6 Kohlenstoffatome, wobei die Gruppen $R^1$ und $R^2$ verbunden sein können, um einen Ring zu bilden.

**9.** Verfahren nach einem der Ansprüche 5 bis 8, wobei die ionische Flüssigkeit eine der folgenden Formeln (X), (XI), (XII), (XIII) oder (XIV) aufweist:

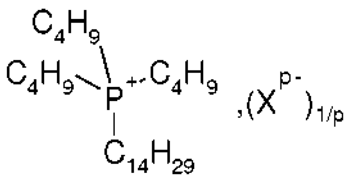 (X),

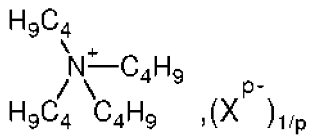 (XI),

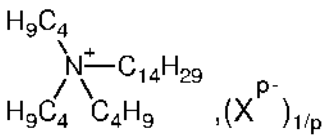 (XII),

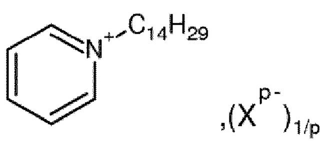 (XIII),

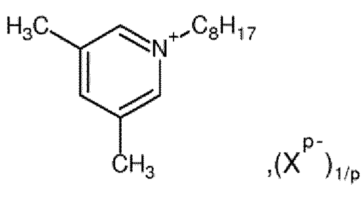 ,(XIV)

wobei $X^p$ ein Anion mit Ladung p ist.

**10.** Verfahren nach einem der Ansprüche 5 bis 9, wobei das Anion $X^{p-}$ ausgewählt ist aus den Anionen $BF_4^-$, $PF_6^-$, $CF_3SO_3^-$, $HSO_4^-$, $SO_4^{2-}$, $NO_3^-$, $CH_3COO^-$, $CF_3CO_2^-$, $ClO_4^-$, $HPO_4^{2-}$, $H_2PO_4^-$, Halogeniden, den Anionen $BR^5{}_4^-$, $RCO_2^-$ oder $R^5SO_3^-$, wobei $R^5$ eine lineare oder verzweigte Alkylgruppe mit 1 bis 4 Kohlenstoffatomen, vorzugsweise Methyl, ist.

**11.** Verfahren nach einem der Ansprüche 1 bis 10, wobei der pH der mit Wasser angereicherten Phase $\varphi_w$ unter 4,0, normalerweise unter 3,0 oder sogar unter 2,0, vorzugsweise unter 1,5, besonders bevorzugt unter 1,0, beispielsweise unter 0,5, insbesondere unter 0,2 ist.

**12.** Verfahren nach einem der Ansprüche 1 bis 11, wobei die Säure wie folgt ist:

- eine organische Säure, ausgewählt aus Ameisensäure, Essigsäure, Oxalsäure, Milchsäure, Harnsäure, p-Toluenesulfonsäure, Trifluormethansulfonsäure oder einem Gemisch dieser,
- eine anorganische Säure, ausgewählt aus Salzsäure, Schwefelsäure, Salpetersäure, Phosphorsäure oder einem Gemisch dieser,
- oder ein Gemisch dieser.

**13.** Verfahren nach einem der Ansprüche 5 bis 12, wobei die Säure die Formel $H_P(X^{P-})$ aufweist, wobei $X^{p-}$ das Anion mit Ladung p der ionischen Flüssigkeit der Zusammensetzung ist.

**Claims**

**1.** Method for extracting a metal ion M from a medium, comprising the steps of:

a) contacting an ionic liquid of formula $C^+,(X^{p-})_{1/p}$, in which:

- $C^+$ is an onium cation comprising at least one atom selected from N, S, P or O, the onium cation comprising at least one hydrocarbon chain $R^1$ comprising from 6 to 20 carbon atoms, optionally interrupted by one or more groups selected from -S-, -O-, - (C=O)-O-, -O-(C=O)-, $-NR^{10}-(C=O)-$, $-(C=O)-NR^{11}-$ or $-NR^{12}R^{13}-$, and/or optionally substituted with one or more groups selected from halogen, $-OR^{14}$, $-(C=O)R^{15}$, - $(C=O)NR^{16}R^{17}-$,
- $NR^{18}R^{19}R^{20}$, $-S-R^{21}$, $-(C=O)-OR^{22}$, wherein $R^{10}$, $R^{11}$, $R^{12}$, $R^{13}$, $R^{14}$, $R^{15}$, $R^{16}$, $R^{17}$, $R^{18}$, $R^{19}$, $R^{20}$ and $R^{21}$ independently represent H or a linear or branched hydrocarbon chain comprising from 1 to 6 carbon atoms and $R^{22}$ represents a linear or branched hydrocarbon chain comprising from 1 to 6 carbon atoms, and
- $X^{p-}$ is an anion of charge p,

said ionic liquid having a solubility in water at 20°C of at least 10 g/L,

with an aqueous medium comprising a metal ion M and an acid, whereby a composition is obtained at a temperature $T_i$, said composition comprising a single liquid phase,
b) varying the temperature to obtain a composition at a temperature $T_f$ different from $T_i$ comprising two liquid phases $\varphi_{IL}$ and $\varphi_W$, the liquid phase $\varphi_{IL}$ being a phase enriched in ionic liquid and the liquid phase $\varphi_W$ being a phase enriched in water, of which the pH is less than or equal to 4.7,
with the proviso that, at the temperature $T_f$, the partition coefficient of the metal ion between the two phases $\varphi_{IL}$ and $\varphi_W$:

$$K(M)_{Tf} = [M]\varphi_{IL}/[M]\varphi_W$$

in which $[M]_{\varphi IL}$ is the concentration in M in the phase $\varphi_{IL}$ at the temperature $T_f$ and $[M]\varphi_W$ is the concentration in M in the phase $\varphi_W$ at the temperature $T_f$, is greater than 1, preferably greater than 1.1, especially greater than 2, even greater than 5, especially greater than 10, typically greater than 100,
c) separating the phases $\varphi_{IL}$ and $\varphi_W$ of the composition obtained in step b), then
d) optionally extracting the metal ion M from the phase $\varphi_{IL}$.

**2.** Method for separating metal ions $M_1$ and $M_2$, comprising the steps of:

a') contacting an ionic liquid of formula $C^+,(X^{p-})_{1/p}$, in which:

- $C^+$ is an onium cation comprising at least one atom selected from N, S, P or O, said onium cation comprising at least one hydrocarbon chain $R^1$ comprising from 6 to 20 carbon atoms, optionally interrupted by one or more groups selected from -S-, -O-, -(C=O)-O-, -O-(C=O)-, $-NR^{10}-(C=O)-$, $-(C=O)-NR^{11}-$ or $-NR^{12}R^{13}-$, and/or optionally substituted with one or more groups selected from an halogen, $-OR^{14}$, $-(C=O)R^{15}$, $-(C=O)NR^{16}R^{17}-$, $-NR^{18}R^{19}R^{20}$, $-S-R^{21}$, $-(C-O)-OR^{22}$, wherein $R^{10}$, $R^{11}$, $R^{12}$, $R^{13}$, $R^{14}$, $R^{15}$, $R^{16}$, $R^{17}$, $R^{18}$, $R^{19}$, $R^{20}$ and $R^{21}$ independently represent H or a linear or branched hydrocarbon chain comprising from 1 to 6 carbon atoms and $R^{22}$ represents a linear or branched hydrocarbon chain comprising from 1 to 6 carbon atoms, and
- $X^{p-}$ is an anion of charge p,
wherein the ionic liquid has a solubility in water at 20°C of at least 10 g/L,

with an aqueous medium comprising two metal ions $M_1$ and $M_2$ (of different natures) and an acid, whereby a composition is obtained at a temperature $T_i$, and wherein the composition comprises a single liquid phase,
b') varying the temperature to obtain a composition at a temperature $T_f$ different from $T_i$ comprising two liquid phases $\varphi_{IL}$ and $\varphi_W$, the liquid phase $\varphi_{IL}$ being a phase enriched in ionic liquid and the liquid phase $\varphi_W$ being a phase enriched in water, of which the pH is less than or equal to 4.7, with the proviso that, at the temperature $T_f$, the separation factor $\beta(M_1/M_2)_{Tf}$ corresponding to the ratio between the partition coefficients of $M_1$ and $M_2$

$$\beta(M_1/M_2)_{Tf}=K(M_1)_{Ti}/K(M_2)_{Tf}=([M_1]\varphi_{IL}/[M_1]\varphi_W)/([M_1]\varphi_{IL}/[M_1]\varphi_W)$$

in which:

- $K(M_1)_{Ti}$ is the partition coefficient at the temperature $T_f$ of the metal ion $M_1$ between the two phases $\varphi_{IL}$ and $\varphi_W$, with $K(M_1)_{Tf} = [M_1]\varphi_{IL}/[M_1]\varphi_W$,
- $K(M_2)_{Tf}$ is the partition coefficient at the temperature $T_f$ of the metal ion $M_2$ between the two phases $\varphi_{IL}$ and $\varphi_W$, with $K(M_2)_{Tf} = [M_2]\varphi_{IL}/[M_2]\varphi_W$
- $[M_1]_{\varphi IL}$ is the concentration in $M_1$ in the phase $\varphi_{IL}$ at the temperature $T_f$ and $[M_1]\varphi_W$ is the concentration in $M_1$ in the phase $\varphi_W$ at the temperature $T_f$,
- $[M_2]_{\varphi IL}$ is the concentration in $M_2$ in the phase $\varphi_{IL}$ at the temperature $T_f$ and $[M_2]\varphi_W$ is the concentration in $M_2$ in the phase $\varphi_W$ at the temperature $T_f$,

is greater than 1, preferably greater than 1.1, especially greater than 2, even greater than 5, especially greater than 10, typically greater than 100,
c') separating the phases $\varphi_{IL}$ and $\varphi_W$ of the composition obtained in step b'), then
d') optionally extracting the metal ion $M_1$ from the phase $\varphi_{IL}$,
e') optionally extracting the metal ion $M_2$ from the phase $\varphi_W$.

**3.** Method for separating metal ions $M_1$ and $M_2$ comprising the steps of:

a") contacting an ionic liquid of formula $C^+,(X^{p-})_{1/p}$, wherein:

- $C^+$ is an onium cation comprising at least one atom selected from N, S, P or O, the onium cation comprising at least one hydrocarbon chain $R^1$ comprising from 6 to 20 carbon atoms, optionally interrupted by one or more groups selected from -S-, -O-, -(C=O)-O-, -O-(C=O)-, $-NR^{10}-(C=O)-$, $-(C=O)-NR^{11}-$ or $-NR^{12}R^{13}-$, and/or optionally substituted with one or more groups selected from a halogen, $-OR^{14}$, $-(C=O)R^{15}$, $-(C=O)NR^{16}R^{17}-$, $-NR^{18}R^{19}R^{20}$, $-S-R^{21}$, $-(C=O)-OR^{22}$, wherein $R^{10}$, $R^{11}$, $R^{12}$, $R^{13}$, $R^{14}$, $R^{15}$, $R^{16}$, $R^{17}$, $R^{18}$, $R^{19}$, $R^{20}$ and $R^{21}$ independently represent H or a linear or branched hydrocarbon chain comprising from 1 to 6 carbon atoms and $R^{22}$ represents a linear or branched hydrocarbon chain comprising from 1 to 6 carbon atoms, and
- $X^{p-}$ is an anion of charge p,
said ionic liquid having a solubility in water at 20°C of at least 10 g/L,
with an aqueous medium comprising an acid and two metal ions $M_1$ and $M_2$ (of different natures), whereby a composition is obtained at a temperature $T_i$, said composition comprising:

- either a single liquid phase, or

- two liquid phases $\varphi_{IL}$ and $\varphi_W$, the liquid phase $\varphi_{IL}$ being a phase enriched in ionic liquid and the liquid phase $\varphi_W$ being a phase enriched in water, of which the pH is less than or equal to 4.7, with the proviso that at temperature $T_i$:

◦ the partition coefficient of the metal ion $M_1$ between the two phases $\varphi_{IL}$ and $\varphi_W$:

$$K(M_1)_{Ti} = [M_1]\varphi_{IL}/[M_1]\varphi_W$$

is greater than 1, preferably greater than 1.1, especially greater than 2, even greater than 5, especially greater than 10, typically greater than 100,

o the partition coefficient of the metal ion $M_2$ between the two phases $\varphi_{IL}$ and $\varphi_W$:

$$K(M_2)_{Ti} = [M_2]\varphi_{IL}/[M_2]\varphi_W$$

is greater than 1, preferably greater than 1.1, especially greater than 2, even greater than 5, especially greater than 10, typically greater than 100,

b") when a composition comprising a single liquid phase is obtained in step a"), varying the temperature to obtain a composition at a temperature $T_f$ different from $T_i$ comprising two liquid phases $\varphi_{IL}$ and $\varphi_W$, the liquid phase $\varphi_{IL}$ being a phase enriched in ionic liquid and the liquid phase $\varphi_W$ being a phase enriched in water, of which the pH is less than or equal to 4.7, with the proviso that at the temperature $T_f$:

- the partition coefficient of the metal ion $M_1$ between the two phases $\varphi_{IL}$ and $\varphi_W$:

$$K(M_1)_{Tf} = [M_1]\varphi_{IL}/[M_1]\varphi_W$$

is greater than 1, preferably greater than 1.1, especially greater than 2, even greater than 5, especially greater than 10, typically greater than 100,

- the partition coefficient of the metal ion $M_2$ between the two phases $\varphi_{IL}$ and $\varphi_W$:

$$K(M_2)_{Tf} = [M_2]\varphi_{IL}/[M_2]\varphi_W$$

is greater than 1, preferably greater than 1.1, especially greater than 2, even greater than 5, especially greater than 10, typically greater than 100,

c") separating the phases $\varphi_{IL}$ and $\varphi_W$ of the composition obtained in step a") or b"), then

d") contacting, at a temperature $T_\Omega$, the $\varphi_{IL}$ phase with an aqueous solution such that:

- the solubility in said aqueous solution at the temperature $T_\Omega$ of $M_1$ is greater than or equal to 0.01 mol/l,
- the solubility in said aqueous solution at the temperature $T_\Omega$ of $M_2$ is less than or equal to 0.001 mol/l,

whereby $M_2$ precipitates and a medium $\Omega$ comprising a solid comprising $M_2$ and at least one liquid phase comprising $M_1$ is obtained,

e") optionally filtering the medium $\Omega$ to recover the solid comprising $M_2$,

f ") optionally extracting the metal ion $M_1$ from the liquid phase.

**4.** Method for purifying an acidic aqueous solution comprising a metal ion M comprising the steps of:

i) contacting an ionic liquid of formula $C^+,(X^{p-})_{1/p}$, in which:

- $C^+$ is an onium cation comprising at least one atom selected from N, S, P or O, the onium cation comprising at least one hydrocarbon chain $R^1$ comprising from 6 to 20 carbon atoms, optionally interrupted by one or more groups selected from -S-, -O-, -(C=O)-O-, -O-(C=O)-, $-NR^{10}$-(C=O)-, -(C=O)-$NR^{11}$- or $-NR^{12}R^{13}$-, and/or optionally substituted with one or more groups selected from halogen, $-OR^{14}$, -(C=O)$R^{15}$, -

(C=O)NR$^{16}$R$^{17}$-, -NR$^{18}$R$^{19}$R$^{20}$, -S-R$^{21}$, -(C=O)-OR$^{22}$, wherein R$^{10}$, R$^{11}$, R$^{12}$, R$^{13}$, R$^{14}$, R$^{15}$, R$^{16}$, R$^{17}$, R$^{18}$, R$^{19}$, R$^{20}$ and R$^{21}$ independently represent H or a linear or branched hydrocarbon chain comprising from 1 to 6 carbon atoms and R$^{22}$ represents a linear or branched hydrocarbon chain comprising from 1 to 6 carbon atoms, and

- $X^{p-}$ is an anion of charge p,

said ionic liquid having a solubility in water at 20°C of at least 10 g/L,

with an aqueous solution S comprising a metal ion M at a $[M]_S$ concentration and an acid, whereby a composition is obtained at a temperature $T_i$, the composition comprising a single liquid phase,

ii) varying the temperature to obtain a composition at a temperature $T_f$ different from $T_i$ comprising two liquid phases $\varphi_{IL}$ and $\varphi_W$, the liquid phase $\varphi_{IL}$ being a phase enriched in ionic liquid and the liquid phase $\varphi_W$ being a phase enriched in water, of which the pH is less than or equal to 4.7, with the proviso that, at the temperature $T_f$, the partition coefficient of the metal ion between the two phases $\varphi_{IL}$ and $\varphi_W$:

$$K(M)_{Tf} = [M]\varphi_{IL}/[M]\varphi_W$$

is greater than 1, preferably greater than 1.1, especially greater than 2, even greater than 5, especially greater than 10, typically greater than 100,

iii) separating the phases $\varphi_{IL}$ and $\varphi_W$ of the composition obtained in stage ii), whereby a phase $\varphi_W$ is obtained which is an acidic aqueous solution whose concentration of metal ion $M[M]\varphi_W$ is lower than the concentration $[M]_S$.

**5.** Method according to claim 1, comprising before step a), a step $a_0$) of preparing the aqueous medium comprising a metal ion M and an acid by leaching.

**6.** Method according to any one of claims 1 to 5, wherein the ionic liquid has one of the following formulas:

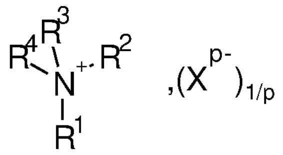
(I),
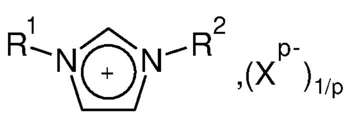
(II),
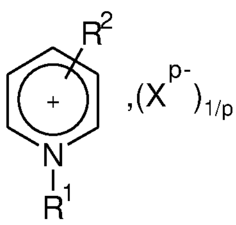
(III),

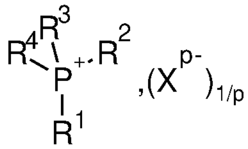
(IV) or
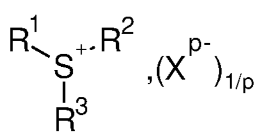
(V),

in which:

- R$^1$ and $X^{p-}$ are as defined in claim 1,
- R$^2$, R$^3$ and R$^4$ independently represent a hydrocarbon chain comprising from 1 to 20 carbon atoms, optionally interrupted by one or more groups chosen from -S-, -O-, -(C=O)-O-, -O-(C=O)-, -NR$^{110}$-(C=O)-, -(C=O)-NR$^{111}$- or -NR$^{112}$R$^{113}$-, and/or optionally substituted by one or more groups chosen from a halogen, -OR$^{114}$, -(C=O)R$^{115}$, -(C=O)NR$^{116}$R$^{117}$-, - NR$^{118}$R$^{119}$R$^{120}$, -S-R$^{121}$, -(C=O)-OR$^{122}$, wherein R$^{110}$, R$^{111}$, R$^{112}$, R$^{113}$, R$^{114}$, R$^{115}$, R$^{116}$, R$^{117}$, R$^{118}$, R$^{119}$, R$^{120}$, R$^{121}$ and R$^{122}$ independently represent H or a linear or branched hydrocarbon chain comprising from 1 to 6 carbon atoms,

wherein two groups selected from R$^1$, R$^2$, R$^3$ and R$^4$ may be connected to form a ring.

**7.** Method according to claim 6 wherein the R$^1$ chain comprises at least 8, especially at least 10, typically at least 12, for example at least 14 carbon atoms.

8. Method according to any one of claims 5 to 7, wherein the $C^+$ cation comprises, in addition to the hydrocarbon chain $R^1$, a hydrocarbon chain $R^2$ comprising from 2 to 20 carbon atoms, in particular from 4 to 20 carbon atoms optionally interrupted by one or more groups selected from -S-, -O-, -(C=O)-O-, -O-(C=O)-, $-NR^{210}$-(C=O)-, -(C=O)-$NR^{211}$- or $-NR^{212}R^{213}$-, and/or optionally substituted with one or more groups selected from halogen, $-OR^{214}$, - (C=O)$R^{215}$, -(C=O)$NR^{216}R^{217}$-, $-NR^{218}R^{219}R^{220}$, -S-$R^{221}$, -(C=O)-$OR^{222}$, wherein $R^{210}$, $R^{211}$, $R^{212}$, $R^{213}$, $R^{214}$, $R^{215}$, $R^{216}$, $R^{217}$, $R^{218}$, $R^{219}$, $R^{220}$, $R^{221}$ and $R^{222}$ independently represent H or a linear or branched hydrocarbon chain comprising from 1 to 6 carbon atoms, wherein the groups $R^1$ and $R^2$ may be connected to form a ring.

9. Method according to any one of claims 5 to 8, wherein the ionic liquid has one of the following formulas

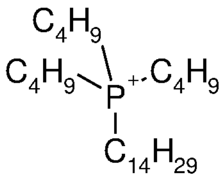 $,(X^{p-})_{1/p}$ (X),

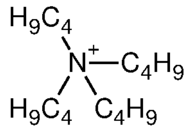 $,(X^{p-})_{1/p}$ (XI),

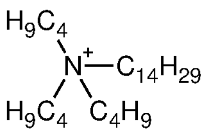 $,(X^{p-})_{1/p}$ (XII),

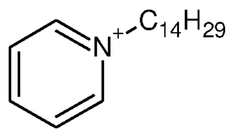 $,(X^{p-})_{1/p}$ (XIII),

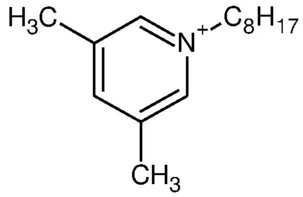 $,(X^{p-})_{1/p}$ (XIV)

in which $X^{p-}$ is an anion of charge p.

10. Method according to any one of claims 5 to 9, wherein the anion $X^{p-}$ is selected from anions $BF_4^-$, $PF_6^-$, $CF_3SO_3^-$, $HSO_4^-$, $SO_4^{2-}$, $NO_3^-$, $CH_3COO^-$, $CF_3CO_2^-$, $ClO_4^-$, $HPO_4^{2-}$, $H_2PO_4^-$, halides, anions $BR^5{}_4^-$, $RCO_2^-$ or $R^5SO_3^-$, $R^5$ being a linear or branched alkyl group having from 1 to 4 carbon atoms, preferably methyl.

11. Method according to any one of claims 1 to 10, wherein the pH of the water-enriched phase $\varphi_W$ is less than 4.0, typically less than 3.0, or even less than 2.0, preferably less than at 1.5, particularly preferably less than 1.0, for example less than 0.5, especially less than 0.2.

12. Method according to any one of claims 1 to 11, wherein the acid is:

- an organic acid chosen from formic acid, acetic acid, oxalic acid, lactic acid, uric acid, p-toluenesulphonic acid, trifluoromethanesulphonic acid or a mixture thereof,
- an inorganic acid chosen from hydrochloric acid, sulfuric acid, nitric acid, phosphoric acid or a mixture thereof,
- or a mixture thereof.

13. Method according to any one of claims 5 to 12, wherein the acid has the formula $H_p(X^{p-})$, where is $X^{p-}$ is the anion of charge p of the ionic liquid of the composition.

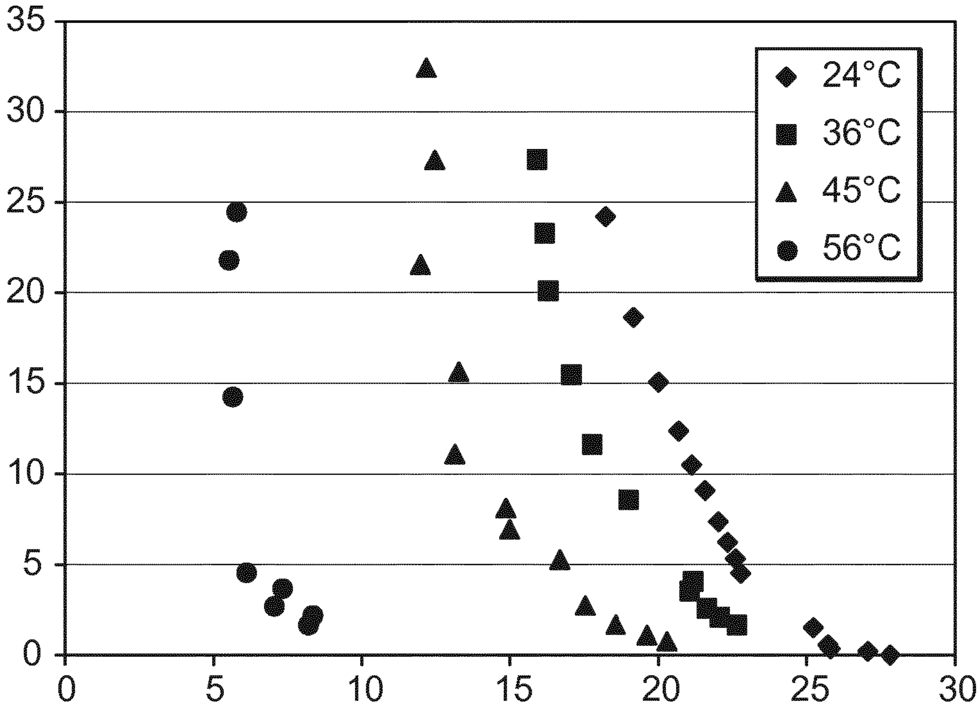
35
30
25
20
15
10
5
0
0
5
10
15
20
25
30
24°C
36°C
45°C
56°C

FIG.1

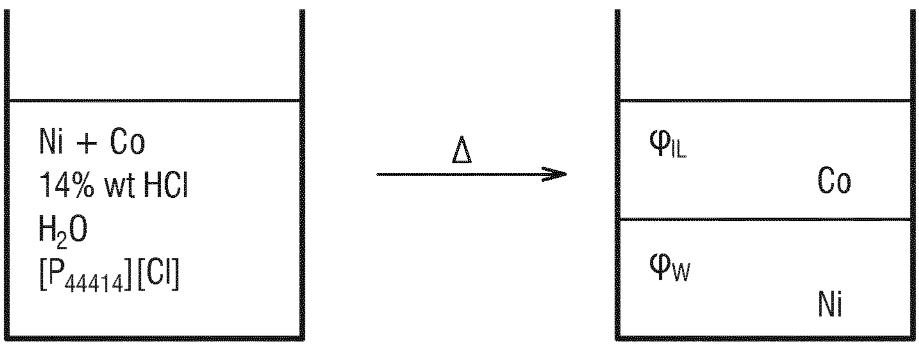
Ni + Co
14% wt HCl
H2O
[P44414][Cl]
Δ
φIL
Co
φW
Ni

FIG.2

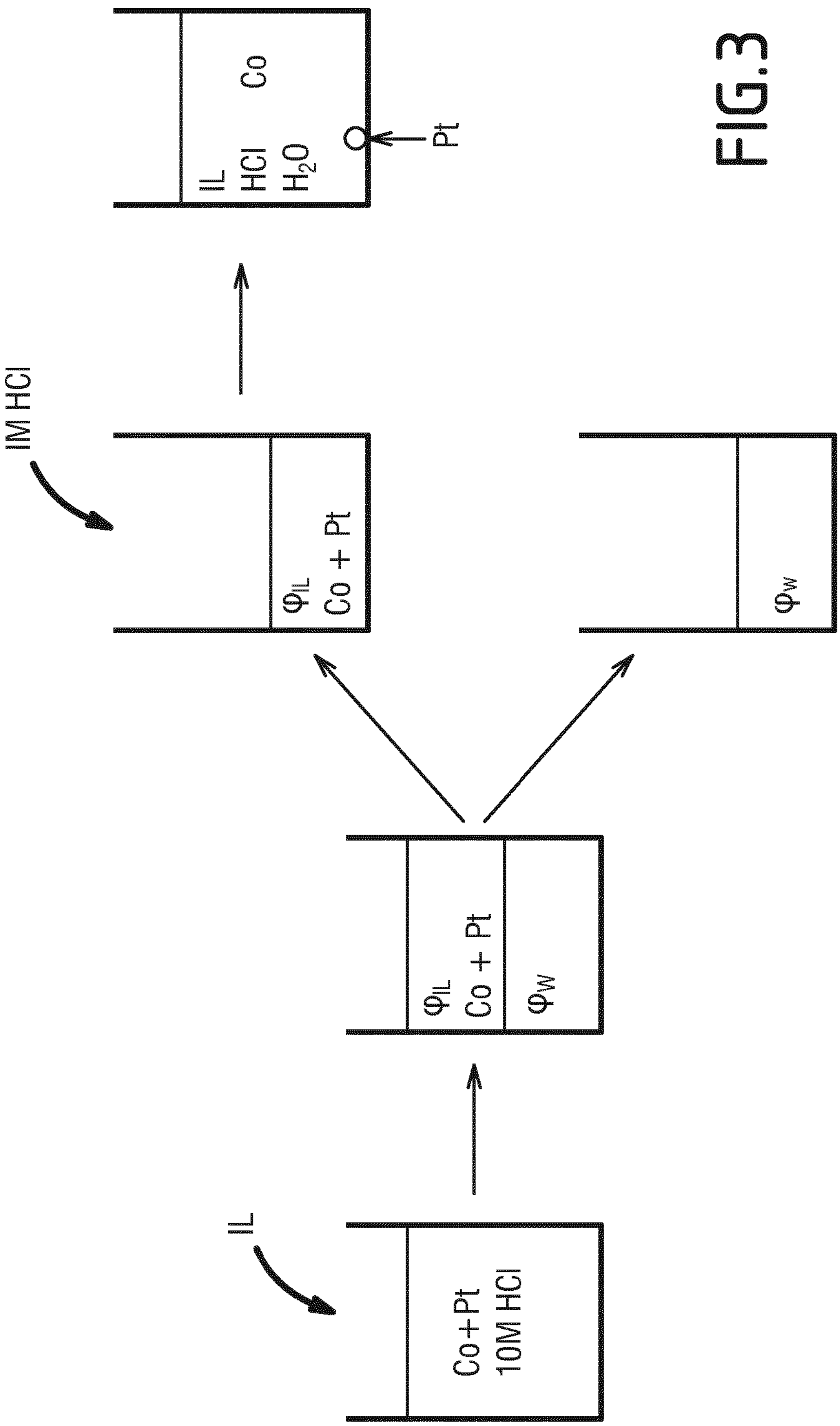

Co+Pt
10M HCl
IL
$\varphi_{IL}$
Co + Pt
$\varphi_W$
IM HCl
$\varphi_{IL}$
Co + Pt
$\varphi_W$
IL
HCl
$H_2O$
Co
Pt


FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **ONGHENA et al.** *Chem. Comm.,* 2015, vol. 51, 15932-15935
- **GHOSH et al.** *J. Radioanal. Nucl. Chem.,* 2014, vol. 302, 925-930
- **ONGHENA et al.** *Ind. Eng. Chem ; res.,* 2015, vol. 54, 1887-1898
- **WELLENS et al.** *Green Chem.,* 2012, vol. 14, 1657
- **HOOGERSTRAETE et al.** *Green Chem.,* 2013, vol. 15, 919
- **DE LOS RIOS et al.** *J. Chem. Eng. Data,* 2010, vol. 55, 605